(19) Europäisches Patentamt
European Patent Office
Office européen des brevets

(11) **EP 3 147 339 B1**

(12) **EUROPEAN PATENT SPECIFICATION**

(45) Date of publication and mention
of the grant of the patent:
**15.04.2020 Bulletin 2020/16**

(51) Int Cl.:
***C09J 133/00*** *(2006.01)*   ***C09J 7/00*** *(2018.01)*
***C09J 133/06*** *(2006.01)*

(21) Application number: **15795885.1**

(22) Date of filing: **12.05.2015**

(86) International application number:
**PCT/JP2015/063636**

(87) International publication number:
**WO 2015/178251 (26.11.2015 Gazette 2015/47)**

(54) **WATER-DISPERSED PRESSURE-SENSITIVE ADHESIVE COMPOSITION AND PRESSURE-SENSITIVE ADHESIVE SHEET**

WASSERDISPERGIERTE HAFTZUSAMMENSETZUNG UND HAFTFOLIE

COMPOSITION ADHÉSIVE DISPERSÉE DANS L'EAU ET FEUILLE ADHÉSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2014 JP 2014103790**

(43) Date of publication of application:
**29.03.2017 Bulletin 2017/13**

(73) Proprietor: **Nitto Denko Corporation
Ibaraki-shi, Osaka 567-8680 (JP)**

(72) Inventors:
• **KITAHARA, Tsunaki
Ibaraki-shi
Osaka 567-8680 (JP)**
• **TOSAKI, Yutaka
Ibaraki-shi
Osaka 567-8680 (JP)**
• **Nurul Janna Binti Abdullah
40300 Shah Alam
Selangor Darul Ehsan (MY)**

(74) Representative: **Grünecker Patent- und Rechtsanwälte
PartG mbB
Leopoldstraße 4
80802 München (DE)**

(56) References cited:
EP-A1- 2 177 583       EP-A1- 2 730 630
WO-A1-2013/005506      JP-A- S 568 476
JP-A- H10 279 907      JP-A- 2003 105 298
JP-A- 2003 105 298     JP-A- 2013 199 524
KR-A- 20130 108 108

**Description**

[Technical Field]

The present invention relates to a water-dispersed pressure-sensitive adhesive composition and a pressure-sensitive adhesive sheet.

[Background Art]

In general, pressure-sensitive adhesive (PSA) exists as a soft solid (viscoelastic material) in a room temperature range and has a property to adhere easily to adherend with some pressure applied. By taking advantage of such features, PSA has been widely used in various fields, for example, in a form of PSA sheet having PSA formed in film (a PSA layer). Examples of a typical method for forming a PSA layer include a method where a PSA composition containing an adhesive component in a liquid medium is applied to a suitable surface and allowed to dry. Lately, from the standpoint of environmental health, etc., in comparison with a solvent-based PSA composition in which an adhesive component is dissolved in an organic solvent, preference tends to be placed on a water-based PSA composition in which PSA particles are dispersed in an aqueous solvent. Technical literatures related to water-dispersed PSA compositions include Patent Documents 1 and 2.

Patent Document 3 discloses a water-dispersed pressure-sensitive adhesive composition comprising as a base polymer thereof a water-dispersed acrylic copolymer (polymer L) with a glass transition temperature in the range of -70°C to -50°C; and further comprising 0.5 to 15 parts by weight of a water-dispersed acrylic copolymer (polymer H) with a Tg in the range of 30°C to 120°C in relation to 100 parts by weight of the polymer L based on solid content; wherein polymer L is obtained by polymerization of a monomer starting material comprising 60 wt% or more of an alkyl (meth)acrylate with a $C_8$-$C_{12}$ alkyl group (monomer Ia); and 0.5 to 10 wt% of a radical polymerizable monomer with a carboxyl group (monomer Ib).

Patent Document 4 discloses a water-dispersed pressure-sensitive adhesive composition comprising an acrylic polymer (A) obtainable by polymerizing a monomer composition (A) comprising an alkyl (meth)acrylate as a primary component and a reactive functional group-containing monomer, an acrylic polymer (B) obtainable by polymerizing a monomer composition (B) comprising an alkyl (meth)acrylate as a primary component and a reactive functional group-containing monomer, the acrylic polymer (B) having a higher glass transition temperature than the acrylic polymer (A) and a crosslinking agent (C) that is reactive with the reactive functional group.

Patent Document 5 relates to a water-dispersed pressure-sensitive adhesive composition comprising a vinly polymer with a specific molecular weight of from 500 to 30,000.

Patent Document 6 relates to a composition comprising an acrylic polymer having a (meth)alkylacrylate or an alicyclic ester as a main monomer component in which a solvent-soluble content is 20 to 90 wt%, based on the total solid content.

[Citation List]

[Patent Literature]

[Patent Document 1] Japanese Patent Application Publication No. 2006-176781
[Patent Document 2] Japanese Patent Application Publication No. 2012-188512
[Patent Document 3] EP 2177583 A1
[Patent Document 4] EP 2730630 A1
[Patent Document 5] KR 2013 0108108 A
[Patent Document 6] Japanese Patent Application Publication No. 2003-105298

[Summary of Invention]

[Technical Problem]

PSA sheets with PSA layers formed from water-dispersed PSA compositions tend to lack sufficient adhesive strength to adherends when compared to PSA sheets formed from solvent-based PSA compositions. In addition, there are trade-offs between adhesive strength and cohesive strength, and thus, it has been difficult to combine these features in a good balance.

In a known technique to increase the adhesive strength of PSA (acrylic PSA) that comprises an acrylic polymer as the base polymer, a tackifier resin such as rosin is added to the PSA composition. From the standpoint of reducing the lowering of cohesive strength, it is preferable to use a tackifier resin with a relatively high softening point. When a tackifier resin is added to a water-dispersed PSA composition, an emulsion of the tackifier resin is generally used; however, it has been inconveniently difficult to emulsify a high softening point tackifier resin.

Patent Document 1 discloses the use of a polymer additive as a tackifier, the additive comprising an aqueous emulsion of an acrylic polymer with a low molecular weight. Even when Patent Document 1 is referenced, however, it has been difficult to use a water-dispersed PSA composition to make PSA that combines adhesive strength and cohesive strength at a high level.

The present invention has been made in view of such circumstances with an objective to provide a water-dispersed PSA composition capable of forming a PSA that combines adhesive strength and cohesive strength in a good balance. Another related objective is to provide a PSA sheet formed with such a water-dispersed PSA composition.

[Solution to Problem]

The water-dispersed PSA composition disclosed herein comprises an acrylic polymer (A) being a polymer of a starting monomer mixture (A) and an acrylic polymer (B) being a polymer of a starting monomer mixture (B). The acrylic polymer (B) has a glass transition temperature of 0 °C or higher. The acrylic polymer (B) has a weight average molecular weight of from $0.35 \times 10^4$ or higer and below $1 \times 10^4$. The acrylic polymer (A) has a weight average molecular weight higher than the weight average molecular weight of the acrylic polymer (B). The starting monomer mixture (B) comprises a carboxy group-containing monomer at a ratio of 1% by weight or greater but 20% by weight or lower. The pressure-sensitive adhesive composition is free of a conventional general tackifier resin emulsion, or a tackifier is used in an amount of 5 parts by weight or less to 100 parts by weight of the amount of the polymers (A) and (B) combined. The PSA composition having such a composition can form a PSA that favorably combines adhesive strength and cohesive strength. The PSA composition is dispersed in water; and therefore, it is preferable from the standpoint of the environmental health, etc.

The adhesive strength referred to here can be accessed by the force required to peel the PSA adhered to an adherend from the adherend, that is, the peel strength. The peel strength can be measured, for instance, by the method described later in Examples. The cohesive strength referred to here can be evaluated, for instance, by the holding power test described later in Examples.

The starting monomer mixture (B) preferably comprises a (meth)acrylate having a cyclic structure. The PSA composition comprising the acrylic polymer (B) having such a monomer composition can form a PSA that exhibits greater adhesive strength. The cyclic structure-containing (meth)acrylate content is preferably, for instance, more than 50 % by weight of the starting monomer mixture (B).

The starting monomer mixture (B) comprises a carboxy group-containing monomer. The PSA composition comprising the acrylic polymer (B) having such a monomer composition can form a PSA that exhibits greater adhesive strength. From the standpoint of the repulsion resistance, etc., the carboxy group-containing monomer content in the starting monomer mixture (B) is at a ratio of 1% by weight or greater but 20% by weight or lower.

The PSA composition according to a preferable embodiment comprises 5 parts to 50 parts by weight of the acrylic polymer (B) to 100 parts by weight of the acrylic polymer (A). The PSA composition having such a composition is preferable since it is likely to form a PSA that favorably combines adhesive strength and cohesive strength.

The weight average molecular weight of the acrylic polymer (B) is lower than $1 \times 10^4$. The PSA composition comprising such an acrylic polymer (B) can form a PSA that combines adhesive strength and cohesive strength at a higher level.

The glass transition temperature of the acrylic polymer (B) is preferably 50 °C or higher, but 120 °C or lower. The PSA composition comprising an acrylic polymer (B) having a glass transition temperature in this range can form a PSA that combines adhesive strength and cohesive strength at a higher level.

The starting monomer mixture (A) preferably comprises more than 50 % by weight of an alkyl (meth)acrylate having an alkyl group with 4 to 12 carbon atoms. The PSA composition comprising an acrylic polymer (A) having such a monomer composition can favorably form a PSA that exhibits great adhesive strength to various types of adherend.

The starting monomer mixture (A) preferably comprises a carboxy group-containing monomer. The PSA composition comprising an acrylic polymer (A) having such a monomer composition can form a PSA that combines adhesive strength and cohesive strength at a higher level. From the standpoint of the storage stability of the PSA composition, etc., the carboxy group-containing monomer content in the starting monomer mixture (A) is preferably 10 % by weight or less.

The glass transition temperature of the acrylic polymer (A) is typically lower than 0 °C and preferably -20 °C or lower. The PSA composition comprising an acrylic polymer (A) having such a glass transition temperature can form a PSA that exhibits greater adhesive strength.

Preferably, in the PSA composition, the acrylic polymer (A) has an SP value $SP_A$ and the acrylic polymer (B) has an SP value $SP_B$ with a solubility difference $\triangle SP$ greater than -2.0 $(cal/cm^3)^{1/2}$, but less than 2.0 $(cal/cm^3)^{1/2}$, the $\triangle SP$ being defined as the difference between $SP_A$ and $SP_B$ (i.e. $SP_A$ - $SP_B$). Because of this, the effect of the inclusion of the acrylic polymers (A) and (B) together to increase the adhesive properties can be more favorably produced.

This description also provides a PSA sheet having a PSA layer formed with a PSA composition disclosed herein. Such a PSA sheet may favorably combine adhesive strength and cohesive strength.

[Brief Description of Drawings]

Fig. 1 shows a cross-sectional diagram schematically illustrating an embodiment of the PSA sheet.

Fig. 2 shows a cross-sectional diagram schematically illustrating another embodiment of the PSA sheet.

Fig. 3 shows a cross-sectional diagram schematically illustrating another embodiment of the PSA sheet.

Fig. 4 shows a cross-sectional diagram schematically illustrating another embodiment of the PSA sheet.

Fig. 5 shows a cross-sectional diagram schematically illustrating another embodiment of the PSA sheet.

Fig. 6 shows a cross-sectional diagram schematically illustrating another embodiment of the PSA sheet.

Fig. 7 shows a diagram illustrating the method for the foam repulsion resistance test.

Fig. 8 shows a diagram illustrating the procedures of a method for testing repulsion resistance to foam.

Fig. 9(a) and Fig. 9(b) show diagrams illustrating the procedures of a method for testing repulsion resistance to aluminum.

[Description of Embodiments]

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate sizes or reduction scales of the PSA sheet to be provided as an actual product by the present invention.

In this description, "A to B" showing a range means "A or greater, but B or less". In this description, "weight", "% by weight" and "parts by weight" are treated as synonymous with "mass", "% by mass" and "parts by mass", respectively. The "primary component" in this description refers to a component exceeding 50 % by weight of the content, unless otherwise indicated.

The term "PSA" in this description refers to, as described earlier, a material that exists as a soft solid (a viscoelastic material) in a room temperature range and has a property to adhere easily to adherend with some pressure applied. As defined in "Adhesion: Fundamental and Practice" by C. A. Dahlquist (McLaren & Sons (1966), P. 143), PSA referred to herein is a material that has a property satisfying complex tensile modulus $E^*$ (1Hz) < $10^7$ $dyne/cm^2$ (typically, a material that exhibits the described characteristics at 25 °C).

As used herein, the term "(meth)acryloyl" comprehensively refers to acryloyl and methacryloyl. Similarly, the terms "(meth)acrylate" and "(meth)acryl" comprehensively refer to acrylate and methacrylate, and acryl and methacryl, respectively.

As used herein, the term "acrylic polymer" refers to a polymer comprising, as a monomeric unit constituting the polymer, a monomeric unit derived from a monomer having at least one (meth)acryloyl group per molecule. In the following, a monomer having at least one (meth)acryloyl group per molecule may be called "acrylic monomer". Thus, the acrylic polymer in this description is defined as a polymer comprising a monomeric unit derived from an acrylic monomer. Typical examples of such an acrylic polymer include an acrylic polymer in which the acrylic monomer accounts for more than 50 % by weight of all the monomers used in the synthesis of the acrylic polymer.

In this description, the glass transition temperature (Tg) of an acrylic polymer refers to the value determined by the Fox equation based on the Tg values of homopolymers of the respective monomers forming the polymer and their weight fractions (copolymerization ratio by weight) of the monomers. For the Tg values of homopolymers, the values provided in known references are used.

In the art disclosed herein, for the Tg values of homopolymers of monomers, the following values are used, to be specific.

| | |
|---|---|
| 2-ethylhexyl acrylate | -70 °C |
| n-butyl acrylate | -55 °C |
| methyl methacrylate | 105 °C |
| n-butyl methacrylate | 20 °C |
| t-butyl methacrylate | 107 °C |
| cyclohexyl acrylate | 15 °C |
| cyclohexyl methacrylate | 66 °C |
| isobornyl acrylate | 94 °C |
| isobornyl methacrylate | 180 °C |
| acrylic acid | 106 °C |
| methacrylic acid | 228 °C |

With respect to monomers other than those listed above, for the Tg values of the corresponding homopolymers, values given in "Polymer Handbook" (4th edition, John Wiley & Sons, Inc., 1999) are used. If more than one Tg values are listed in the reference book, the "conventional" value is used.

When no value is given in the reference book, the Tg of a homopolymer can be determined as follows: A sheet of the homopolymer is synthesized by solution polymerization and formed into a sheet. While applying a shear strain at a frequency of 1 Hz using a rheometer, the viscoelasticity is measured in the shear mode over a temperature range of -70 °C to 150 °C at a heating rate of 5 °C/min. The temperature at the peak of shear loss modulus G" (temperature at which the G" curve maximizes) is used as the Tg of the homopolymer.

In this description, an SP value refers to a solubility parameter determined based on the basic structure of the compound by the method proposed by Fedors. In particular, from the vaporization energy $\Delta e_i$ (cal) of individual atoms or a group of atoms at 25 °C and the molar volume $\Delta v_i$ (cm$^3$) of individual atoms or a group of atoms at the same temperature, the SP value is determined by the next equation (2):

$$\text{SP value} = (\Sigma\Delta e_i / \Sigma\Delta v_i)^{1/2} \qquad (2)$$

The values of $\Delta e_i$ and $\Delta v_i$ can be obtained from, for instance, Journal of the Adhesive Society of Japan, Vol. 22, No. 10 (1986), p. 566. In this description, the unit of a number indicating an SP value is (cal/cm$^3$)$^{1/2}$ unless otherwise stated.

In this description, an aqueous solvent refers to water or a solvent mixture comprising water as the primary component (a component at a concentration exceeding 50 % by weight). The solvent constituting the solvent mixture other than water can be one, two or more species selected among various organic solvents (lower alcohols, etc.) that can be uniformly mixed with water. The water content in the aqueous solvent in this description is typically 90 % by weight or higher, or preferably 95 to 100 % by weight.

<Acrylic polymer (A)>

The PSA composition disclosed herein comprises an acrylic polymer (A) which is a polymer of a starting monomer mixture (A). Hereinafter, the acrylic polymer (A) is sometimes abbreviated to the polymer (A).

The polymer (A) is a polymer of a starting monomer mixture (A) that comprises an alkyl (meth)acrylate as its primary monomer and may further comprise a secondary monomer copolymerizable with the primary monomer. The primary monomer here refers to a component that accounts for more than 50 % by weight of the monomer composition of the starting monomer mixture (A).

As the alkyl (meth)acrylate, for instance, a compound represented by the following formula (1) can be used:

$$CH_2=C(R^1)COOR^2 \qquad (1)$$

Herein, $R^1$ in the formula (1) is a hydrogen atom or a methyl group. $R^2$ is an alkyl group having 1 to 20 carbon atoms. Hereinafter, such a range of the number of carbon atoms may be indicated as $C_{1-20}$. From the standpoint of the storage elastic modulus of PSA, an alkyl (meth)acrylate with $R^2$ being a $C_{1-14}$ (e.g. $C_{2-14}$) alkyl group can be preferably used. For instance, a preferable starting monomer mixture (A) comprises, as its primary monomer, an alkyl (meth)acrylate with $R^2$ being a $C_{4-12}$ alkyl group. An alkyl (meth)acrylate with $R^1$ being a hydrogen atom and $R^2$ being a $C_{4-10}$ alkyl group (or simply a $C_{4-10}$ alkyl acrylate, hereinafter) is more preferable.

Examples of an alkyl (meth)acrylate with $R^2$ being a $C_{1-14}$ alkyl group include methyl (meth)acrylate, ethyl (meth)acrylate, propyl (meth)acrylate, isopropyl (meth)acrylate, n-butyl (meth)acrylate, pentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, lauryl (meth)acrylate, and tetradecyl (meth)acrylate. Such alkyl (meth)acrylates can be used singly as one species or in a combination of two or more species. Particularly preferable alkyl (meth)acrylates include n-butyl acrylate (BA) and 2-ethylhexyl acrylate (2EHA).

The ratio of the alkyl (meth)acrylate in all the monomers used in the synthesis of the polymer (A) is preferably 70 % by weight or greater, more preferably 85 % by weight or greater, or yet more preferably 90 % by weight or greater. The maximum alkyl (meth)acrylate content is not particularly limited; it is usually preferably 99.5 % by weight or less (e.g. 99 % by weight or less). Alternatively, the acrylic polymer may be a polymer essentially formed from the alkyl (meth)acrylate. When a $C_{4-10}$ alkyl acrylate is used as a monomer component, the $C_{4-10}$ alkyl acrylate content of the alkyl (meth)acrylate in the monomer component is usually suitably greater than 50 % by weight, preferably 70 % by weight or greater, more preferably 90 % by weight or greater, or yet more preferably 95 % by weight or greater (typically 99 % to 100 % by weight).

A favorable example of the polymer (A) is an acrylic polymer in which BA accounts for more than 50 % by weight (e.g. 60 % by weight or more) of the starting monomer mixture (A). The starting monomer mixture (A) may further comprises 2EHA at a ratio lower than BA. Another favorable example of the polymer (A) is an acrylic polymer in which 2EHA accounts for more than 50 % by weight (e.g. 60 % by weight or more) of the starting monomer mixture (A). The starting monomer mixture (A) may further comprise BA at a ratio lower than 2EHA.

The starting monomer mixture (A) may comprise, as an optional component, a secondary monomer copolymerizable with the alkyl (meth)acrylate as the primary monomer. For the secondary monomer, solely one species or a combination of two or more species can be used.

Secondary monomers capable of introducing functional groups that can serve as crosslinking points into the polymer (A) or of contributing to an increase in adhesive strength include functional group-containing monomers such as carboxy group-containing monomers, hydroxy (OH) group-containing monomers, amide group-containing monomers, imide group-containing monomers, amino group-containing monomers, epoxy group-containing monomers, keto group-containing monomers and alkoxysilyl group-containing monomers.

Among such functional group-containing monomers, a monomer selected among carboxy group-containing monomers and acid anhydrides thereof (or collectively referred to as "carboxy group-containing monomers" hereinafter) can be preferably used. Examples of carboxy group-containing monomers include acrylic acid (AA), methacrylic acid (MAA), carboxyethyl (meth)acrylate, carboxypentyl (meth)acrylate, itaconic acid, maleic acid, fumaric acid, crotonic acid and isocrotonic acid. Especially preferable carboxy group-containing monomers include AA and MAA. Either one of them can be used alone, or AA and MAA can be used together at an arbitrary ratio. When a carboxy group-containing monomer is used, the carboxy group-containing monomer content in the starting monomer mixture (A) is usually suitably 15 % by weight or lower. From the standpoint of the storage stability of the PSA composition, etc., it is preferably 10 % by weight or lower (e.g. 5 % by weight or lower). From the standpoint of favorably obtaining the effects of the use of the carboxy group-containing monomer, its ratio is suitably 0.2 % by weight or higher, or preferably 0.5 % by weight or higher (e.g. 1 % by weight or higher).

Other examples of the functional group-containing monomer that can be preferably used include alkoxysilyl group-containing monomers. Examples of the alkoxysilyl group-containing monomers include (3-(meth)acryloxypropyl)trimethoxysilane, (3-(meth)acryloxypropyl)triethoxysilane, (3-(meth)acryloxypropyl)methyldimethoxysilane, (3-(meth)acryloxypropyl)methyldiethoxysilane. Copolymerization of such an alkoxysilyl group-containing monomer is an advantageous technique in making a PSA sheet capable of combining adhesive strength and cohesive strength at a higher level. When an alkoxysilyl group-containing monomer is co-polymerized, the alkoxysilyl group-containing monomer content in the starting monomer mixture (A) is usually preferably about 0.005 % to 1 % by weight (e.g. 0.01 % to 0.1 % by weight).

Such functional group-containing monomers are preferably used in a range of a total of 15 % by weight or less (e.g. 0.2 % to 15 % by weight, preferably 1 % to 10 % by weight) of the starting monomer mixture (A). When the amount of functional group-containing monomers used is in this range, it tends to be easier to combine adhesive strength and cohesive strength at a high level.

For the purposes of increasing the cohesion of the polymer (A), adjusting the Tg described later, etc., other co-monomer(s) can be used as secondary monomers besides the aforementioned functional group-containing monomers.

Examples of such co-monomers include vinyl ester-based monomers such as vinyl acetate, vinyl propionate, etc.; aromatic vinyl compounds such as styrene, substituted styrenes ($\alpha$-methylstyrene, etc.), vinyl toluene, etc.; alicyclic (meth)acrylates such as cyclohexyl (meth)acrylate, cyclopentyl (meth)acrylate, isobornyl (meth)acrylate, etc.; aromatic cyclic (meth)acrylates such as aryl (meth)acrylates and arylalkyl (meth)acrylates; cyano group-containing monomers such as acrylonitrile, methacrylonitrile, etc.; monomers having nitrogen atom-containing rings such as N-vinyl-2-pyrrolidone, N-vinylimidazole, N-(meth)acryloylmorpholine, etc.; olefinic monomers such as ethylene, propylene, isoprene, butadiene, isobutylene, etc.; chlorine-containing monomers such as vinyl chloride, vinylidene chloride, etc.; isocyanate group-containing monomers such as 2-(meth)acryloyloxyethyl isocyanate, etc.; alkoxy group-containing monomers such as methoxyethyl (meth)acrylate, ethoxyethyl (meth)acrylate, etc.; vinyl ether-based monomers such as methyl vinyl ether, ethyl vinyl ether, etc.; and the like. The amount of such other co-monomer(s) can be suitably selected according to the purpose and intended use, and thus is not particularly limited. For instance, it is preferably 10 % by weight or less of the starting monomer mixture (A).

It is preferable to select the monomer composition of the acrylic polymer (A) so that the polymer (A)'s Tg is lower than the acrylic polymer (B)'s Tg. From the standpoint of the adhesive strength, etc., the polymer (A)'s Tg is usually suitably 0 °C or lower, preferably -10 °C or lower, more preferably -20 °C or lower, or yet more preferably -30 °C or lower (e.g. -40 °C or lower). The minimum Tg of the polymer (A) is not particularly limited, but it is usually preferably -70 °C or higher, or more preferably -65 °C or higher. The polymer (A)'s Tg can be adjusted with the composition of the starting monomer mixture (A) (i.e. the monomer species in the starting monomer mixture (A) and their weight ratio).

The acrylic polymer (A)'s SP value ($SP_A$) is preferably selected so that the solubility difference $\Delta SP$ is greater than -2.0, but less than 2.0, where $\Delta SP$ is defined as the difference ($SP_A - SP_B$) relative to the acrylic polymer (B)'s SP value ($SP_B$) which is described later. By this, the effect of the combined inclusion of the acrylic polymers (A) and (B) to increase the adhesive properties may be favorably displayed. While no particular limitations are imposed, $SP_A$ is typically 9.0 to 12.0, preferably 9.5 to 11.5, or more preferably 9.5 to 11.0, for example, 9.5 to 10.5. $SP_A$ can be adjusted with the composition of the starting monomer mixture (A).

In an embodiment where the acrylic polymer (A) is a copolymer, the acrylic polymer (A)'s SP value ($SP_A$) can be determined by obtaining, for the respective monomers in the starting monomer mixture (A), the products of their SP values and molar fractions (copolymerization ratio by mole) in the starting monomer mixture (A) and combining them. When the acrylic polymer (A) is a homopolymer, the SP value of the monomer can be used as the SP value of the acrylic polymer (A). The same applies to the acrylic polymer (B)'s SP value ($SP_B$).

As the method for polymerizing the starting monomer mixture (A) to form the polymer (A), commonly known or used polymerization methods can be employed; in particular, emulsion polymerization can be preferably employed. An aqueous emulsion of the polymer (A) obtained by such a method can be used as is in preparing the water-dispersed PSA composition. As the monomer supply method in carrying out emulsion polymerization, the following methods can be suitably employed: an all-at-once supply method where the entire amount of the starting monomer mixture (A) is supplied at once, a gradual (dropwise) supply method, a portionwise (dropwise) supply method, and the like. Part or all of the starting monomer mixture (A) can be mixed and emulsified with water in advance and the emulsion (monomer emulsion) can be supplied to a reaction vessel all at once, gradually or in portions. The polymerization temperature can be suitably selected depending on the monomer species, the type of polymerization initiator, etc. For example, it can be about 20 °C to 100 °C (typically 40 °C to 80 °C).

The initiator used in polymerization of the starting monomer mixture (A) can be suitably selected from heretofore known polymerization initiators. For instance, an azo-based polymerization initiator such as 2,2'-azobisisobutyronitrile can be preferably used. Other examples of polymerization initiators include persulfates such as potassium persulfate; peroxide-based initiators such as benzoyl peroxide and hydrogen peroxide; substituted ethane-based initiators such as phenyl-substituted ethane; and aromatic carbonyl compounds. Yet other examples of polymerization initiators include a redox-based initiator by combination of a peroxide and a reducing agent. These polymerization initiators can be used singly as one species or in combination of two or more species. The polymerization initiator can be used in a typical amount which can be selected from a range of about 0.005 part to 1 part by weight (typically 0.01 part to 1 part by weight) relative to 100 parts by weight of the starting monomer mixture (A).

As the emulsifier, any one of anionic, nonionic and cationic emulsifiers can be used. These can be used singly as one species or in combination of two or more species. It is usually preferable to use an anionic or a nonionic emulsifier. Examples of anionic emulsifiers include sodium lauryl sulfate, ammonium lauryl sulfate, sodium dodecyl benzene sulfonate, sodium polyoxyethylene alkyl ether sulfate, ammonium polyoxyethylene alkyl phenyl ether sulfates, sodium polyoxyethylene alkyl phenyl ether sulfates, and the like. Examples of nonionic emulsifiers include polyoxyethylene alkyl ethers, polyoxyethylene alkyl phenyl ethers, and the like. It is also possible to use a radically polymerizing emulsifier (a reactive emulsifier) having a structure of an aforementioned anionic or nonionic emulsifier with a radically polymerizing group such as propenyl group, etc., incorporated therein. While no particular limitations are applied, from the standpoint of the polymerization stability in the synthesis of the polymer (A), the storage stability of the PSA composition and so on, it is preferable to employ an embodiment using a radically polymerizing group-free emulsifier solely as the emulsifier.

For the polymerization, as necessary, various heretofore known chain transfer agents (which can be considered also as molecular weight-adjusting agents or polymerization degree-adjusting agents) can be used. The chain transfer agent can be one, two or more species selected from mercaptans such as n-lauryl mercaptan, tert-lauryl mercaptan, glycidyl mercaptan, and 2-mercaptoethanol. Particularly preferable chain transfer agents include n-lauryl mercaptan and tert-lauryl mercaptan. When a chain transfer agent is used in the polymerization of the starting monomer mixture (A), its amount used is not particularly limited. For instance, to 100 parts by weight of the starting monomer mixture (A), it can be about 0.001 part to 0.5 part by weight or it is usually preferably 0.01 part to 0.1 part by weight.

The polymer (A) has a Mw of typically $10 \times 10^4$ or higher and usually suitably $20 \times 10^4$ or higher. From the standpoint of favorably combining adhesive strength and cohesive strength, the Mw of the acrylic polymer (A) is preferably $30 \times 10^4$ or higher, or more preferably $40 \times 10^4$ or higher (e.g. $50 \times 10^4$ or higher). The maximum Mw of the acrylic polymer (A) is not particularly limited and can be, for instance, $500 \times 10^4$ or lower, typically $200 \times 10^4$ or lower, or preferably $150 \times 10^4$ or lower. The acrylic polymer (A)'s Mw can be adjusted, for instance, with the type and amount of polymerization initiator, polymerization temperature, the type and amount of emulsifier, the presence of chain transfer agent as well as its type and amount used if any, the composition of the starting monomer mixture (A), the type of crosslinking, the degree of crosslinking (gel fraction), etc.

Here, the acrylic polymer (A)'s Mw can be measured by the following method: A sample of the acrylic polymer (A) to be measured is immersed in tetrahydrofuran (THF) at room temperature (e.g. 23 °C) for seven days to dissolve THF-soluble portion; THF-insoluble portion is filtered out and the resulting filtrate is concentrated or diluted as necessary to prepare a THF solution containing the THF-soluble portion at a concentration of about 0.1 % to 0.3 % by weight. The THF solution is subjected to gel permeation chromatography (GPC) to determine the weight average molecular weight (Mw) based on standard polystyrene. In particular, the Mw can be measured by the method described later in Examples.

<Acrylic polymer (B)>

Next, the acrylic polymer (B) is described further in detail. The acrylic polymer (B) in the art disclosed herein is a polymer of the starting monomer mixture (B), the polymer having a relatively low molecular weight with a Mw of from $0.35 \times 10^4$ or higher and below $1 \times 10^4$. Hereinafter, the acrylic polymer (B) is sometimes abbreviated to the polymer (B). Similarly to the polymer (A), the Mw of the polymer (B) can be determined by GPC analysis as the weight average molecular weight (Mw) based on standard polystyrene. More specifically, the Mw can be measured by the method described later in Examples.

The polymer (B) has a monomer composition designed to give a Tg of the polymer (B) of 0 °C or higher. In other words, the composition of the starting monomer mixture (B) can be selected to obtain a Tg value of 0 °C or higher for the acrylic polymer (B); besides this limitation, there are no particular limitations to the Tg values of the homopolymers of the respective monomers possibly included in the starting monomer mixture (B). The monomers forming the starting monomer mixture (B) can be suitably selected among, for instance, the materials exemplified above as the monomers that can be used in the starting monomer mixture (A).

In a preferable embodiment, the starting monomer mixture (B) may have a composition essentially free of a monomer whose homopolymer has a Tg below 0 °C. For instance, essentially all of the starting monomer mixture (B) can be a monomer whose homopolymer has a Tg of 0 °C or higher. In another preferable embodiment, the starting monomer mixture (B) may comprise a monomer whose homopolymer has a Tg below 0 °C up to a level where the polymer (B)'s Tg is 0 °C or higher.

The polymer (B)'s Tg is typically 5 °C or higher, preferably 15 °C or higher, or more preferably 20 °C or higher. With increasing polymer (B)'s Tg, the cohesive strength of the PSA tends to increase. From such a standpoint, in a preferable embodiment, the polymer (B)'s Tg can be 25 °C or higher, 50 °C or higher, or even 55 °C or higher (e.g. 65 °C or higher).

The maximum Tg of the polymer (B) is not particularly limited. For instance, it can be 200 °C or lower. In a preferable embodiment, the polymer (B)'s Tg can be 180 °C or lower, or it is preferably 150 °C or lower, or more preferably 120 °C or lower. With decreasing polymer (B)'s Tg, the rough surface adhesive strength tends to improve.

In this description, the rough surface adhesive strength refers to the adhesiveness to an adherend having a microstructure on the surface, in particular, the adhesiveness to a plastic foam (e.g. an elastic foam such as soft urethane foam) having a microstructure primarily resulting from bubbles on the surface.

While no particular limitations are imposed, from the standpoint of obtaining greater effects of the use of the polymer (B), the difference between the polymer (B)'s Tg and the polymer (A)'s Tg (or "ΔTg" hereinafter) is usually preferably 50 °C or greater, or more preferably 70 °C or greater. In a preferable embodiment, ΔTg can be 100 °C or greater (e.g. 120 °C or greater). The maximum ΔTg is not particularly limited, but it is usually 220 °C or less, or preferably 200 °C or less, for example, 180 °C or less. When ΔTg is in these ranges, it tends to be easy to balance adhesive strength and cohesive strength.

The polymer (B) according to a preferable embodiment is a polymer of a starting monomer mixture (B) that comprises a (meth)acrylate as its primary monomer and may further comprise a secondary monomer copolymerizable with the primary monomer. Here, the primary monomer refers to a component that accounts for more than 50 % by weight of the monomer composition of the starting monomer mixture (B).

Examples of the (meth)acrylate that can be used as a component of the starting monomer mixture (B) include alkyl (meth)acrylates, alicyclic alkyl (meth)acrylates, aromatic cyclic (meth)acrylates, (meth)acrylates having nitrogen atom-containing rings (e.g. the (meth)acrylates among the monomers having nitrogen atom-containing rings exemplified as the secondary monomer that can be used in the starting monomer mixture (A)), and (meth)acrylates having functional groups such as carboxy group and hydroxy group (e.g. the (meth)acrylates among the functional group-containing monomers exemplified as the secondary monomer that can be used in the starting monomer mixture (A)). These can be used singly as one species or in a combination of two or more species.

The (meth)acrylate content in the starting monomer mixture (B) is typically 60 % by weight or greater, preferably 70 % by weight or greater, or more preferably 80 % by weight or greater. In a preferable embodiment, for instance, 90 % by weight or more of the starting monomer mixture (B) can be the (meth)acrylate or even essentially all of the starting monomer mixture (B) can be the (meth)acrylate.

In this description, "essentially all of a monomer composition" indicates that it accounts for 98 % by weight or more (typically 99 % by weight or more) of the monomer composition.

The starting monomer mixture (B) according to a preferable embodiment may comprise, as its primary monomer, a (meth)acrylate having a homopolymer Tg of 0 °C or higher. The content of such (meth)acrylate in the starting monomer mixture (B) is typically 60 % by weight or greater, preferably 70 % by weight or greater, or more preferably 80 % by weight or greater. In a preferable embodiment, the ratio of the (meth)acrylate having a homopolymer Tg of 0 °C or higher in the starting monomer mixture (B) can be 90 % by weight or greater, or can be essentially the entirety thereof.

Specific examples of the (meth)acrylate having a homopolymer Tg of 0 °C or higher may include alkyl (meth)acrylates such as methyl acrylate, methyl methacrylate, n-butyl methacrylate, and tert-butyl methacrylate; alicyclic (meth)acrylates such as cyclohexyl acrylate, cyclohexyl methacrylate, cyclopentyl acrylate, cyclopentyl methacrylate, isobornyl acrylate, isobornyl methacrylate, dicyclopentanyl acrylate, dicyclopentanyl methacrylate, dicyclopentenyl acrylate, dicyclopentenyloxyethyl acrylate, dicyclopentenyloxyethyl methacrylate, tetrahydrofurfuryl acrylate, and tetrahydrofurfuryl methacrylate; and aromatic cyclic (meth)acrylates such as phenyl acrylate, phenyl methacrylate, benzyl acrylate, benzyl methacrylate, and phenoxyethyl methacrylate. In particular, a preferable starting monomer mixture (B) comprises, as the primary monomer, a (meth)acrylate that is an ester of (meth)acrylic acid and an acyclic or cyclic alcohol with two or more carbon atoms (e.g. five or more, but twelve or fewer carbon atoms). The inclusion of a polymer (B) being a polymer of such a starting monomer mixture (B) tends to increase the adhesive strength to an adherend that is low in polarity.

The starting monomer mixture (B) according to another preferable embodiment comprises a (meth)acrylate having a cyclic structure (or a "cyclic (meth)acrylate" hereinafter). Favorable examples of the cyclic (meth)acrylate include ring-containing species among (meth)acrylates, that is, alicyclic (meth)acrylates and aromatic cyclic (meth)acrylates, with homopolymer Tg values of 0 °C or higher. Alicyclic (meth)acrylates are particularly preferable. Preferable specific examples include cyclohexyl acrylate, cyclohexyl methacrylate, isobornyl acrylate and isobornyl methacrylate.

The cyclic (meth)acrylate content in the starting monomer mixture (B) can be, for instance, 5 % by weight or greater; it is preferably 15 % by weight or greater, or more preferably 30 % by weight or greater. The use of a cyclic (meth)acrylate tends to favorably combine adhesive strength and cohesive strength. The use of a cyclic (meth)acrylate tends to increase the repulsion resistance as well. While the reason for this is not necessarily clear, for instance, the following can be thought: With the use of a (meth)acrylate having a cyclic structure of large steric hindrance as a component of the starting monomer mixture (B), and the addition of the polymer (B) obtained by emulsion polymerization of the starting monomer mixture (B) to the polymer (A) obtained by separate polymerization, whereby the cyclic structure of the polymer (B) in the PSA can effectively contribute to increase the cohesive strength and repulsion resistance. When the cyclic (meth)acrylate content in the starting monomer mixture (B) is higher than 50 % by weight, greater results can be obtained. The ratio can be 70 % by weight or higher, also 80 % by weight or higher, or even 90 % by weight or higher. Essentially all of the starting monomer mixture (B) can be a cyclic (meth)acrylate. A preferable starting monomer mixture (B) comprises a cyclic (meth)acrylate with a homopolymer Tg of 0 °C or higher at such a ratio.

In a PSA composition disclosed herein, the Tg of the primary monomer in the starting monomer mixture (B) is preferably 10 °C or higher, more preferably 30 °C or higher, or yet more preferably 50 °C or higher (e.g. 55 °C or higher). With increasing Tg of the primary monomer, the PSA's cohesive strength and repulsion resistance tend to increase. The Tg of the primary monomer in the starting monomer mixture (B) is typically 200 °C or lower, usually preferably 150 °C or lower, or more preferably 120 °C or lower (e.g. 100 °C or lower). The primary monomer having not too high a Tg may be advantageous from the standpoint of the rough surface adhesive strength, etc.

The starting monomer mixture (B) may comprise, as an optional component, a secondary monomer copolymerizable with the (meth)acrylate. Examples of the secondary monomer in the starting monomer mixture (B) include the species that are not (meth)acrylates (or non-(meth)acrylates) among the compounds exemplified as the secondary monomer that can be used in the starting monomer mixture (A). These secondary monomers can be used singly as one species or in a combination of two or more species.

One monomer in the starting monomer mixture (B) is a carboxy group-containing monomer. Examples of the carboxy group-containing monomer that can be used include the same species as those for the starting monomer mixture (A). Particularly preferable carboxy group-containing monomers include AA and MAA. One of these can be used alone, or AA and MAA can be used together at an arbitrary ratio. The carboxy group-containing monomer in the starting monomer mixture (B) is comprised at a ratio of 1% by weight or greater but 20% by weight or lower. From the standpoint of the storage stability of the PSA composition, etc., it is preferably 15 % by weight or less.

The ratio of the secondary monomer (i.e. non-(meth)acrylate monomer(s)) in the starting monomer mixture (B) is typically 40 % by weight or less, usually preferably 30 % by weight or less, or more preferably 20 % by weight or less. The secondary monomer content can be 10 % by weight or less, or the starting monomer mixture (B) may be essentially free of a secondary monomer.

The polymer (B)'s SP value ($SP_B$) is not particularly limited. It can be typically 12.0 or lower, preferably 11.5 or lower, or more preferably 11.0 or lower, for instance, 10.5 or lower. With decreasing SP value of the polymer (B), in a PSA comprising the polymer (B), the adhesive strength tends to increase with respect to adherends of low polarity such as polyethylene and polypropylene. From the standpoint of the adhesion to adherends of high polarity such as metals and the cohesion of the PSA, etc., the polymer (B)'s SP value is usually suitably 8.5 or higher, preferably 9.0 or higher, or more preferably 9.5 or higher, for instance, 9.8 or higher. The polymer (B)'s SP value can be adjusted with the composition of the starting monomer mixture (B).

As the method for polymerizing the starting monomer mixture (B) to form the polymer (B), commonly known or used polymerization methods can be employed; in particular, emulsion polymerization can be preferably employed. An aqueous emulsion of the polymer (B) obtained by such a method can be used as is in preparing the water-dispersed PSA composition. As the emulsion polymerization of the starting monomer mixture (B) can be carried out using similar materials and conditions to the starting monomer mixture (A), redundant description is omitted. For example, in the emulsion polymerization of the starting monomer mixture (B), usable monomer supply method, polymerization temperature and so on or selectable polymerization initiator, emulsifier, chain transfer agent and so forth can be the same with the starting monomer mixture (A).

The polymer (B)'s Mw is $0.35 \times 10^4$ or higher. With increasing Mw of the polymer (B), the cohesive strength of the PSA tends to increase. From such a standpoint, the polymer (B)'s Mw is preferably $0.4 \times 10^4$ or higher, or more preferably $0.45 \times 10^4$ or higher (e.g. $0.5 \times 10^4$ or higher). In a preferable embodiment, the acrylic polymer (B)'s Mw can be $0.6 \times 10^4$ or higher, or even $0.7 \times 10^4$ or higher. The polymer (B)'s Mw is below $1 \times 10^4$. With decreasing Mw of the polymer (B), the adhesive strength and rough surface adhesive strength tend to improve. More favorable results may be obtained with a polymer (B) with Mw below $0.8 \times 10^4$. The polymer (B)'s Mw can be adjusted, for instance, with the type and amount of polymerization initiator, polymerization temperature, the type and amount of emulsifier, the presence of chain transfer agent as well as its type and amount used if any, the composition of the starting monomer mixture (B), the type of crosslinking, the degree of crosslinking (gel fraction), etc.

In a preferable embodiment, the amount of chain transfer agent used in emulsion polymerization of the starting monomer mixture (B) can be, for instance, 0.5 part by weight or more to 100 parts by weight of the starting monomer mixture (B); it is usually suitably 1 part by weight or more, preferably 2 parts by weight or more, or more preferably 3 parts by weight or more. In emulsion polymerization using a chain transfer agent in such an amount, the polymer (B) can be favorably produced, having a preferable Mw value disclosed herein. The amount of chain transfer agent used to 100 parts by weight of the starting monomer mixture (B) can be 4 parts by weight or more, or even 5 parts by weight or more. The maximum amount of chain transfer agent used is not particularly limited. To 100 parts by weight of the starting monomer mixture (B), it is usually suitably 30 parts by weight or less, preferably 25 parts by weight or less, or more preferably 20 parts by weight or less.

The above-described amount of chain transfer agent used can be preferably applied to a chain transfer agent selected among, for instance, alkyl mercaptans such as n-lauryl mercaptan and tert-lauryl mercaptan.

From the standpoint of the Mw adjustment, the amount of polymerization initiator used in emulsion polymerization of the starting monomer mixture (B) is suitably 0.01 part by weight or more, or preferably 0.05 part by weight more, relative to 100 parts by weight of the starting monomer mixture (B). From the standpoint of the polymerization stability, the amount of polymerization initiator used is usually suitably 2 parts by weight or less, preferably 1 part by weight or less, or more preferably 0.5 part by weight or less (e.g. 0.3 part by weight or less), relative to 100 parts by weight of the starting monomer mixture (B).

<PSA Composition>

The PSA composition disclosed herein is characterized by comprising the polymers (A) and (B) together. While no particular limitations are imposed, it is preferable that the starting monomer mixtures (A) and (B) are individually polymerized. The PSA composition disclosed herein may be prepared by obtaining separately-produced (synthesized) polymers (A) and (B) and mixing the two. The PSA composition disclosed herein can be favorably produced, for instance, by a method comprising obtaining an aqueous emulsion comprising the polymer (A) and an aqueous emulsion comprising the polymer (B), and mixing them.

The blend ratio of polymer (A) to polymer (B) is not particularly limited. For instance, to 100 parts by weight of the polymer (A), 3 parts or more by weight of the polymer (B) can be added. From the standpoint of obtaining greater effects of the use of the polymer (B), the amount of the polymer (B) added to 100 parts by weight of the polymer (A) is usually suitably 5 parts by weight or greater, or preferably 10 parts by weight or greater. When the amount of the polymer (B) added to 100 parts by weight of the polymer (A) is 20 parts by weight or greater (e.g. 25 parts by weight or greater), greater results can be obtained. From the standpoint of easily balancing adhesive strength and cohesive strength, the amount of the polymer (B) added to 100 parts by weight of the polymer (A) is usually suitably 100 parts by weight or less, or preferably 70 parts by weight or less. The polymer (B) can be added in an amount of 50 parts by weight or less, or even 40 parts by weight or less.

In the PSA composition disclosed herein, the solubility difference ΔSP between the polymers (A) and (B) is typically greater than -2.0, but less than 2.0, more preferably -1.5 to 1.5, yet more preferably -1.0 to 1.0, or particularly preferably -0.5 to 0.5. As ΔSP becomes closer to zero, there are tendencies that the compatibility of the polymers (A) and (B) increases and the effects of the use of a mixture of the polymers (A) and (B) in a water-dispersed PSA composition are more favorably displayed. It is also preferable to have ΔSP in these ranges from the standpoint of the transparency of the PSA formed from the PSA composition.

In addition to the polymer (A) and polymer (B), the PSA composition disclosed herein can comprise a crosslinking agent added as necessary, selected from general crosslinking agents such as carbodiimide-based crosslinking agents, hydrazine-based crosslinking agents, epoxy-based crosslinking agents, isocyanate-based crosslinking agents, oxazoline-based crosslinking agents, aziridine-based crosslinking agents, metal chelate-based crosslinking agents, silane coupling agents and the like. Such crosslinking agents can be used singly as one species or in combination of two or more species. The amount of crosslinking agent used is not particularly limited and can be suitably selected so as to form a PSA exhibiting desirable properties. For example, the crosslinking agent content can be about 0.001 to 1 part by weight relative to 100 parts by weight of the amount of the polymers (A) and (B) combined. Alternatively, the PSA composition may be essentially free of a crosslinking agent.

The PSA composition disclosed herein can be made in an embodiment essentially free of a conventional general tackifier resin emulsion. In such an embodiment, it may bring about a PSA sheet that combines great adhesive strength and cohesive strength. This can avoid issues such as increased costs associated with emulsification of a tackifier resin and organic solvent contamination caused by the use of a tackifier resin emulsion. Nonetheless, as far as the effects of the present invention are not greatly impaired, supplemental use of one, two or more species among heretofore known tackifier resins and emulsions thereof may be allowed. Examples of conventional tackifier resins include rosin-based resins, rosin derivative resins, petroleum-based resin, terpene-based resins, phenol-based resins, and ketone-based resins.

When such a tackifier resin is used, the amount used is 5 by weight or less to 100 parts by weight of the amount of the polymers (A) and (B) combined. It is preferable to use the tackifier resin in an amount less than the amount of the polymer (B) by weight. It is especially preferable to keep the amount of a tackifier resin having a softening point of 140 °C or higher (more preferably 120 °C or higher, e.g. 100 °C or higher) within these ranges. The PSA composition disclosed herein can be preferably made in an embodiment essentially free of a tackifier resin having such a high softening point (e.g. an embodiment where the tackifier resin content is 1 part by weight or less to 100 parts by weight of the polymers (A) and (B) combined, or at or below the detection limit).

The PSA composition disclosed herein may contain, as necessary, an acid or a base (ammonia water, etc.) used for pH adjustment and so on. Examples of other optional components that can be contained in the PSA composition include various additives generally used in the field of water-dispersed PSA compositions, such as viscosity-adjusting agents, leveling agents, plasticizers, fillers, colorants including pigments and dyes, etc., stabilizing agents, preservatives, anti-aging agents, and so on. With respect to various additives, those heretofore known can be used according to usual manners. Since these do not particularly characterize the present invention, detailed descriptions are omitted.

<PSA Sheet>

This description provides a PSA sheet comprising a PSA layer formed from a water-dispersed PSA composition disclosed herein. It may be an on-substrate PSA sheet having such a PSA layer on one or each face of a substrate (support), or a substrate-free PSA sheet having the PSA layer retained on a release liner (which can be considered as a substrate having a release surface). The concept of the PSA sheet referred to herein may encompass those called as PSA tapes, PSA labels, PSA films, and so on. Although the PSA layer is typically formed in a continuous manner, it is not limited to such a form and it can be formed into, for example, a regular or random pattern of dots, stripes, and so on. The PSA sheet provided by the present invention may be in a form of roll or in a form of a piece of sheet. Alternatively, the PSA sheet can be processed into various other forms.

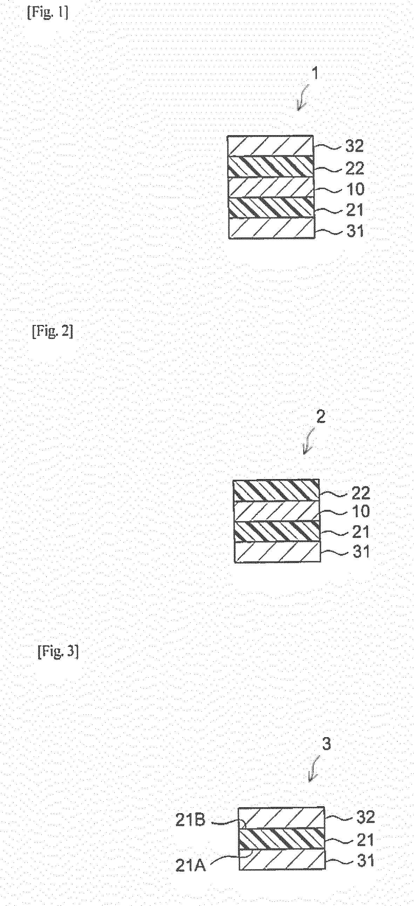

The PSA disclosed herein may have, for example, cross-sectional constitutions schematically illustrated in Fig. 1 to Fig. 6. Among these, Fig. 1 and Fig. 2 show examples of constitutions of an adhesively double-faced on-substrate PSA sheet. Double-faced PSA sheet 1 illustrated in Fig. 1 has a constitution in which PSA layers 21 and 22 are provided, respectively, on two faces (both non-releasable) of a substrate 10 and the PSA layers 21 and 22 are protected, respectively, with release liners 31 and 32. Double-faced PSA sheet 2 illustrated in Fig. 2 has a constitution in which PSA layers 21 and 22 are provided, respectively, on two faces (both non-releasable) of a substrate 10 and PSA layer 21 as one of the two is protected with a release liner 31 having a release surface on each face. This type of PSA sheet 2 can be configured so that PSA layer 22 is also protected with release liner 31 by winding the PSA sheet to allow the other PSA layer 22 to contact the back face of release liner 31.

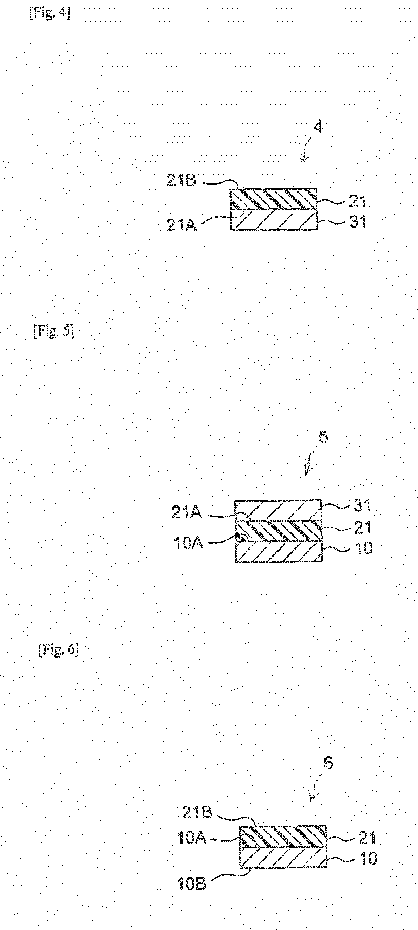

Fig. 3 and Fig. 4 show examples of constitution of a substrate-free double-faced PSA sheet. PSA sheet 3 illustrated in Fig. 3 has a constitution in which two faces 21A and 21B of a substrate-free PSA layer 21 are protected, respectively, with release liners 31 and 32 each having a release surface at least on the PSA layer side. PSA sheet 4 illustrated in Fig. 4 has a constitution such that one surface (adhesive face) 21A of a substrate-free PSA layer 21 is protected with a release liner 31 having a release surface on each face; and when this is wound, the other surface (adhesive face) 21B of PSA layer 21 contacts the back face of release liner 31 so that the other surface 21B is also protected with release liner 31.

Fig. 5 and Fig. 6 show examples of constitutions of an adhesively single-faced on-substrate PSA sheet. PSA sheet 5 illustrated in Fig. 5 has a constitution in which a PSA layer 21 is provided on a surface 10A (non-releasable) of a substrate 10 and a surface (adhesive face) 21A of the PSA layer 21 is protected with a release liner 31 having a release surface at least on the PSA layer side. PSA sheet 6 illustrated in Fig. 6 has a constitution in which a PSA layer 21 is provided on a face 10A (non-releasable) of a substrate 10. The other face 10B of substrate 10 is a release surface and when PSA sheet 6 is wound, the other face 10B contacts PSA layer 21 so that the face (adhesive face) 21B of the PSA layer is protected with the other face 10B of the substrate.

In a single-faced or double-faced on-substrate PSA sheet, as the substrate to support (back) the PSA layer(s), resin film, paper, fabrics, rubber sheets, foam sheets, metal foil and a composite of these can be used. Examples of resin film include polyolefin film formed from polyolefin such as polyethylene (PE), polypropylene (PP), ethylene-propylene copolymers, etc.; polyester film formed from polyester such as polyethylene terephthalate (PET), etc.; vinyl chloride resin film; vinyl acetate resin film; polyimide resin film; polyamide resin film; fluorine resin film; cellophane and the like. Examples of paper include Japanese paper, Kraft paper, glassine paper, high-grade paper, synthetic paper, top-coated paper and the like. Examples of fabrics include woven fabric and non-woven fabric of pure or blended yarn of various fibrous materials, etc. Examples of the fibrous materials include cotton, staple cloth, Manila hemp, pulp, rayon, acetate fiber, polyester fiber, polyvinyl alcohol fiber, polyamide fiber, polyolefin fiber, etc. Examples of rubber sheets include natural rubber sheets, butyl rubber sheets, etc. Examples of foam sheets include polyurethane foam sheets, polychloroprene rubber foam sheets, etc. Examples of metal foil include aluminum foil, copper foil, etc.

The concept of non-woven fabric as used herein primarily refers to non-woven fabric for PSA sheets used in the field of PSA tapes and other PSA sheets, typically referring to non-woven fabric (or so-called "paper") fabricated using a general paper machine. Resin film herein is typically a non-porous resin sheet and its concept is distinct from, for instance, non-woven fabric (i.e. excludes non-woven fabric). The resin film may be any of non-stretched film, uniaxially stretched film and bi-axially stretched film. The substrate's surface to be provided with a PSA layer may be subjected to a surface treatment such as primer coating, corona discharge treatment, plasma treatment, etc.

While the thickness of the substrate is not particularly limited and can be suitably selected according to the purpose, it is generally 10 $\mu$m to 500 $\mu$m or preferably 10 $\mu$m to 200 $\mu$m. From the standpoint of the repulsion resistance, for instance, a substrate having a thickness of 10 $\mu$m to 50 $\mu$m can be preferably used.

The thickness of the PSA layer is not particularly limited and can be suitably selected according to the purpose. Usually, the thickness of the PSA layer is suitably about 5 $\mu$m to 200 $\mu$m, preferably about 10 $\mu$m to 150 $\mu$m, or more preferably 15 $\mu$m to 100 $\mu$m (e.g. 20 $\mu$m to 80 $\mu$m). Here, with respect to a double-faced PSA sheet, the thickness of a PSA layer refers to the thickness of the individual PSA layer provided to each face of the substrate.

The method for forming the PSA layer is not particularly limited and a known or commonly-used method can be employed. For example, the following methods can be suitably employed: a direct method where a PSA composition is directly applied to a releasable or non-releasable substrate and allowed to dry; or a transfer method where the PSA composition is applied to a releasable surface and allowed to dry to form a PSA layer on the surface, and the PSA layer is then adhered and transferred to a non-releasable substrate, etc. The PSA composition can be applied, for instance, with a known or commonly used coater such as gravure roll coater, reverse roll coater, kiss roll coater, dip roll coater, bar coater, knife coater, spray coater, or the like.

As the release liner, any conventional release paper or the like can be used without any particular limitations. For example, a release liner having a release layer on a surface of a substrate such as plastic film and paper; a release liner formed from a poorly-adhesive material such as a fluorine-based polymer (polytetrafluoroethylene, etc.) or a polyolefin-based resin (polyethylene, polypropylene, etc.); or the like. The release layer can be formed, for instance, by subjecting the substrate to a surface treatment with a release agent such as silicone-based, long-chain alkyl-based, fluorine-based, and molybdenum disulfide-based release agents.

Although no particular limitations are applied, from the standpoint of the cohesive strength, etc., the PSA formed from the water-dispersed PSA composition disclosed herein can have a gel fraction of, for instance, 20 % or higher; it is usually suitably 25 % or higher, or preferably 27 % or higher (e.g. 30 % or higher). While the maximum gel fraction is not particularly limited, it is usually 95 % or lower, or typically 90 % or lower. From the standpoint of obtaining greater adhesive strength, the gel fraction of the PSA is preferably 60 % or lower, or more preferably 40 % or lower (e.g. 35 % or lower). The gel fraction can be adjusted, for example, by the use or absence of crosslinking agent, the type and amount of crosslinking agent, the use or absence of chain transfer agent, the type and amount of chain transfer agent, etc.

The gel fraction of a PSA can be determined as follows: A measurement sample weighing W1 is wrapped in a porous polytetrafluoroethylene resin sheet and immersed in ethyl acetate at room temperature for one week; the measurement sample is then allowed to dry and ethyl acetate-insoluble portions are measured for weight W2; W1 and W2 are substituted into the next equation: Gel fraction (%) = W2/W1 $\times$ 100. As the porous polytetrafluoroethylene resin sheet, it is desirable to use trade name NITOFURON®NTF1122 (0.2 $\mu$m average pore diameter, 75 % porosity, 85 $\mu$m thick) available from Nitto Denko Corporation or its equivalent.

[Examples]

Several Examples related to the present invention are described below, but the present invention is not intended to be limited to these examples. In the description below, "parts" and "%" are based on the weight unless otherwise specified. The respective properties in the following description were measured or tested as follows.

(1) Weight average molecular weight (Mw)

An aqueous acrylic polymer emulsion was allowed to dry at 130 °C for two hours and a sample thus obtained was immersed in THF at room temperature to dissolve THF-soluble portion. Subsequently, THF-insoluble portion was filtered out and the resulting filtrate was concentrated or diluted as necessary to prepare a THF solution containing the THF-soluble portion at a concentration of about 0.1 % to 0.3 % by weight. The THF solution was subjected to GPC analysis under the conditions shown below to determine the weight average molecular weight (Mw) based on standard polystyrene.

<GPC conditions>

System: HLC-8320GPC available from Tosoh Corporation
Column: TSK gel GMH-H (S), two columns connected
Column temperature: 40 °C
Flow rate: 0.5 mL/min

(2) Peel strength measurement (to SUS)

In an environment at 23 °C, a double-faced PSA sheet was backed over one adhesive face with 25 $\mu$m thick polyethylene terephthalate (PET) film adhered thereto and the resultant was cut to a 20 mm wide by 100 mm long size to prepare a test piece. To a stainless steel plate (SUS304BA plate) as the adherend, the other adhesive face of the test piece was press-bonded with a 2 kg roller moved back and forth once. This was left standing at 23 °C for 30 minutes. Based on JIS Z 0237(2004), in a measurement environment at 23 °C and 50 % RH, using a tensile tester, 180°-peel adhesive strength to the stainless steel plate (to-SUS peel strength) (N/20mm) was measured at a tensile speed of 300 mm/min.

(3) Peel strength measurement (to PP)

As the adherend, a polypropylene plate was used. Otherwise in the same manner as the to-SUS peel strength measurement, 180°-peel adhesive strength to polypropylene plate (to-PP peel strength) (N/20mm) was measured.

(4) Holding power test

Based on JIS Z 0237 (2004), holding power was tested. In particular, in an environment at 23 °C, a double-faced PSA sheet was backed over one adhesive face with 25 $\mu$m thick PET film adhered thereto and the resultant was cut to a width of 10 mm to prepare a test piece. The other adhesive face of the test piece was adhered over a 10 mm wide by 20 mm long bonding area to a phenol resin plate as the adherend. This was left standing in an environment at 40 °C for 30 minutes. The phenol resin plate was then vertically suspended and a 500 g load was applied to the free end (lower end) of the test piece. With the load applied, it was left standing in an environment at 40 °C for one hour. After one hour, when the test piece had fallen off, the result of the holding power test was recorded as "Fell." Otherwise, the result of the holding power test was recorded as "Held" and the displacement (mm) of the test piece from the original position was also measured. The value is shown in parentheses.

(5) Peel strength measurement (to urethane foam)

As the adherend, was obtained a 10 mm thick soft urethane foam (trade name ECS (gray) available from Inoac Corporation) cut to a 30 mm wide by 100 mm long size.

In an environment at 23 °C, a double-faced PSA sheet was backed over one adhesive face with 25 $\mu$m thick PET film adhered thereto and the resultant was cut to a 20 mm wide by 100 mm long size to prepare a test piece. The other adhesive face of the test piece was press-bonded via a 1 mm thick spacer to the adherend with a laminator at a rate of 0.2 m/min. This was stored at 23 °C for 30 minutes. Subsequently, based on JIS Z 0237 (2004), using a tensile tester, in a measurement environment at 23 °C, 50 % RH, 180°-peel adhesive strength (rough surface adhesive strength) was measured at a tensile speed of 300 mm/min. The measurement was carried out over a length of at least 10 mm.

(6) Repulsion resistance test (foam repulsion resistance test)

In an environment at 23 °C, a double-faced PSA sheet was press-bonded over one adhesive face to 10 mm thick soft urethane foam (trade name ECS (gray) available from Inoac Corporation) with a 1 kg roller moved back and forth once. This was stored at 23 °C for one day and cut to a 10 mm wide by 50 mm long size to prepare a test piece.

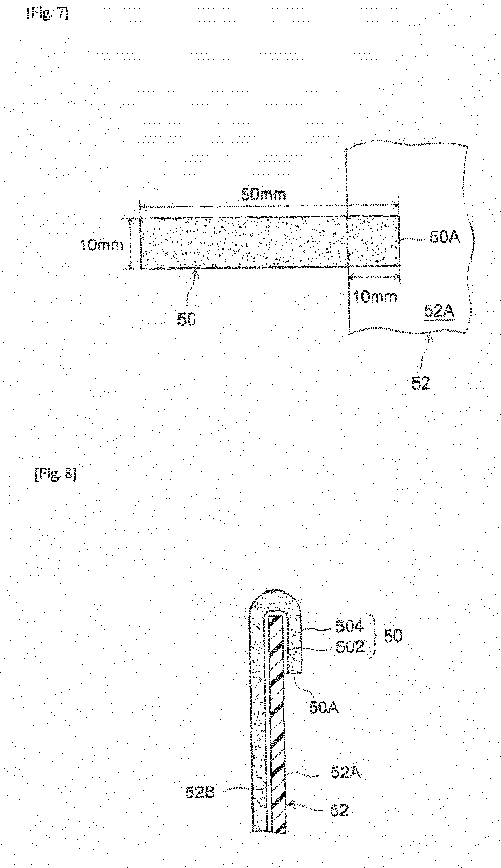

As shown in Fig. 7, to an edge of the first face 52A of a 2 mm thick ABS plate 52, the other adhesive face of test piece 50 was press-bonded over a length of 10 mm from an edge 50A in the length direction (i.e. over a 10 mm wide by 10 mm long bonding area) with a 2 kg roller moved back and forth once. For this, test piece 50 was placed so that the 10 mm position from the edge 50A of test piece 50 came to the outer edge of ABS plate 52 and the rest of test piece 50 vertically outwardly extended from ABS plate 52. Subsequently, as shown in Fig. 8, the remaining part (10 mm wide, 40 mm long) of test piece 50 was folded over the edge of ABS plate 52 and adhered to the second face 52B. In Fig. 8, reference sign 502 shows the PSA sheet and reference sign 504 the urethane foam press-bonded to the one adhesive face of the PSA sheet. The resultant was left standing in an environment at 23 °C, 50 % RH for 24 hours. Subsequently, the lifting distance of edge 50A of test piece 50 was measured. When the test piece 50 completely peeled off the first face 52A, the test result was recorded as "Peeled off."

(7) Repulsion resistance test (aluminum repulsion resistance test)

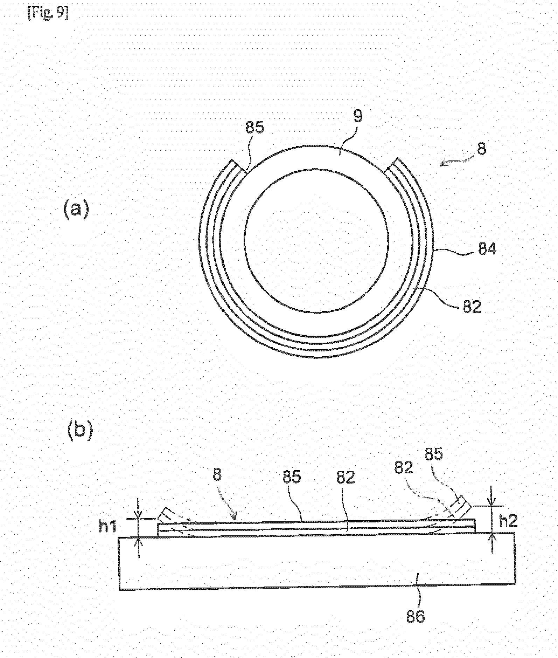

A double-faced PSA sheet was cut to a 10 mm wide by 90 mm long size. The surface of a 10 mm wide by 90 mm long by 0.3 mm thick aluminum plate was washed with toluene. The double-faced PSA sheet was adhered over one adhesive face to the aluminum plate surface to prepare a test piece with the PSA layer being backed with the aluminum plate. The test piece was left still at 23 °C for one day. Subsequently, as shown in Fig. 9(a), with the aluminum plate 85 side of test piece 8 on the inside, test piece 8 was forced to curve in the length direction around the circumference of a cylindrical glass tube 9 of 40 mm diameter for 10 seconds. Release liner 84 was then removed from the PSA layer 82 of test piece 8. As shown in Fig. 9(b), to the pre-washed surface of an acrylic plate (adherend) 86, test piece 8 was press-bonded with a laminator at a bonding pressure of 0.25 MPa, at a bonding speed of 0.3 m/min. After 24 hours at 23 °C, as shown with the imaginary line in Fig. 9(b), the distances h1 and h2 that the two edges of test piece 8 had lifted from the surface of adherend 86 were measured. The average value between the two edges was determined as the lifting distance of test piece 8.

<Experiment 1>

<Example 1>

(Synthesis of acrylic polymer A1)

To a reaction vessel equipped with a condenser, nitrogen inlet, thermometer and stirrer, 30 parts of ion-exchanged water was placed and stirred at room temperature for at least one hour under nitrogen flow. Subsequently, the system was heated to 60 °C. To the reaction vessel, was added 2.2'-azobis[N-(2-carboxyethyl)-2-methylpropionamidine] hydrate (polymerization initiator) (trade name VA-057 available from Wako Pure Chemical Industries, Ltd.). While keeping the system at 60 °C, a monomer emulsion was added dropwise to this over four hours. As for the monomer emulsion, to 40 parts of ion-exchanged water, were added 70 parts of n-butyl acrylate (BA), 30 parts of 2-ethylhexyl acrylate (2EHA), 3 parts of acrylic acid (AA), 0.03 part of 3-methacryloxypropyltrimethoxysilane (trade name KBM-503 available from Shin-Etsu Chemical Co., Ltd.), 0.05 part of n-lauryl mercaptan (chain transfer agent) and 2 parts of sodium polyoxyethylene lauryl sulfate (trade name LATEMUL E118B available from Kao Corporation); the mixture was emulsified and used. After the dropwise addition of the monomer emulsion completed, the resulting reaction mixture was stored at 60 °C for two hours. The system was allowed to cool to room temperature. 10 % ammonium water was added to adjust the pH to 7.5, whereby an aqueous emulsion (Ale) of acrylic polymer A1 was obtained.

The acrylic polymer A1 had a Tg of -56 °C as determined from its monomer composition, an SP value of 10.20, and a Mw of $70 \times 10^4$ by GPC analysis.

(Synthesis of acrylic polymer B1)

To a reaction vessel equipped with a condenser, nitrogen inlet, thermometer and stirrer, 40 parts of ion-exchanged water was placed and stirred at room temperature for at least one hour under nitrogen flow. Subsequently, the system was heated to 60 °C. To the reaction vessel, was added 2.2'-azobis[N-(2-carboxyethyl)-2-methylpropionamidine] hydrate (polymerization initiator) (trade name VA-057 available from Wako Pure Chemical Industries, Ltd.). While keeping the system at 60 °C, a monomer emulsion was added dropwise to this over four hours. As for the monomer emulsion, to 40 parts of ion-exchanged water, were added 95 parts of cyclohexyl acrylate (CHA), 5 parts of AA, 8 parts of tert-lauryl mercaptan (chain transfer agent) and 2 parts of sodium polyoxyethylene lauryl sulfate (emulsifier) (trade name LATEMUL E118B available from Kao Corporation); the mixture was emulsified and used. After the dropwise addition of the monomer emulsion completed, the resulting reaction mixture was stored at 60 °C for two hours. The system was allowed to cool to room temperature. 10 % ammonium water was added to adjust the pH to 7.5, whereby an aqueous emulsion (B1e) of acrylic polymer B1 was obtained.

The acrylic polymer B1 had a Tg of 18 °C as determined from its monomer composition, an SP value of 10.78, and a Mw of $0.49 \times 10^4$ by GPC analysis.

(Preparation of PSA composition)

To 100 parts of non-volatiles in the aqueous emulsion A1e, was admixed 30 parts of the aqueous emulsion B1e based on the non-volatiles. Subsequently, to 100 parts of the acrylic polymers A1 and B1 combined in the mixture, was added 0.1 part of n-decyltrimethoxysilane (trade name Z-6210 available from Toray/Dow Corning Corporation). Viscosity was further adjusted with a thickener (a polyacrylic acid under trade name ARON B-500 available from Toagosei Co., Ltd.) and 10 % ammonium water to obtain a water-dispersed PSA composition according to this Example.

(Fabrication of PSA sheet)

To a release liner (trade name SLB-80WD (V2) available from Kaito Chemical Industry) treated with a silicone-based release agent on each face, the resulting PSA composition was applied to a thickness of 60 $\mu$m after dried and allowed to dry to form a PSA layer. Two such PSA layer-bearing release liners were obtained. The PSA layers were adhered to the two faces of a non-woven fabric substrate (trade name SP-14K available from Daifuku Paper Mfg. Co., Ltd.), respectively, to fabricate a double-faced PSA sheet according to this Example.

A measurement sample of PSA collected from the PSA layer was measured for gel fraction by the method described earlier. As the porous polytetrafluoroethylene resin sheet, was used trade name NITOFURON® NTF1122 available from Nitto Denko Corporation. The measurement resulted in 28.8 % gel fraction for the measurement sample.

In the synthesis of the acrylic polymer B1, cyclohexyl methacrylate (CHMA) was used in place of CHA under the polymerization conditions (polymerization temperature, amounts of chain transfer agent, polymerization initiator and emulsifier) as shown in Table 1 to obtain an aqueous emulsion (B2e) of an acrylic polymer B2. Using the aqueous emulsion B2e, but otherwise in the same manner as Example 1, a water-dispersed PSA composition according to this Example was obtained. In particular, based on non-volatiles, to 100 parts of non-volatiles in the aqueous emulsion A1e, was admixed 30 parts of the aqueous emulsion B2e based on the non-volatiles. Subsequently, to 100 parts of the acrylic polymers A1 and B2 combined, was added 0.1 part of n-decyltrimethoxysilane (trade name Z-6210 available from Toray/Dow Corning Corporation). Viscosity was adjusted with a thickener (a polyacrylic acid under trade name ARON B-500, available from Toagosei Co., Ltd.) and 10 % ammonium water to obtain a water-dispersed PSA composition according to this Example. Using the PSA composition, but otherwise in the same manner as Example 1, a double-faced PSA sheet was fabricated. It had a gel fraction of 30.9 % when measured in the same manner as in Example 1.

<Example 3>

In the synthesis of the acrylic polymer B1, isobornyl acrylate (IBXA) was used in place of CHA and the polymerization temperature and the amounts of chain transfer agent, polymerization initiator and emulsifier were set as shown in Table 1 to obtain an aqueous emulsion (B3e) of an acrylic polymer B3. Using the aqueous emulsion B3e, but otherwise in the same manner as Example 1, a PSA composition was prepared and a double-faced PSA sheet was fabricated. It had a gel fraction of 31.5% when measured in the same manner as in Example 1.

<Example 4>

In the synthesis of the acrylic polymer B1, isobornyl methacrylate (IBXMA) was used in place of CHA under the polymerization conditions as shown in Table 1 to obtain an aqueous emulsion (B4e) of an acrylic polymer B4. Using the aqueous emulsion B4e, but otherwise in the same manner as Example 1, a PSA composition was prepared and a double-faced PSA sheet was fabricated. It had a gel fraction of 31.5 % when measured in the same manner as in Example 1.

<Example 5>

In the synthesis of the acrylic polymer B1, tert-butyl methacrylate (t-BMA) was used in place of CHA under the polymerization conditions as shown in Table 1 to obtain an aqueous emulsion (B5e) of an acrylic polymer B5. Using the aqueous emulsion B5e, but otherwise in the same manner as Example 1, a PSA composition was prepared and a double-faced PSA sheet was fabricated.

<Example 6>

In the synthesis of the acrylic polymer B1, methyl methacrylate (MMA) was used in place of CHA and the polymerization temperature and the amounts of chain transfer agent, polymerization initiator and emulsifier were set as shown in Table 1 to obtain an aqueous emulsion (B6e) of an acrylic polymer B6. Using the aqueous emulsion B6e, but otherwise in the same manner as Example 1, a PSA composition was prepared and a double-faced PSA sheet was fabricated.

<Comparative Example 1>

Without using the aqueous emulsion B1e, but otherwise in the same manner as Example 1, a PSA composition was prepared. In particular, to 100 parts of non-volatiles in the aqueous emulsion A1e, was added 0.1 part of n-decyltrimethoxysilane (trade name Z-6210 available from Toray/Dow Corning Corporation). Viscosity was further adjusted with a thickener (a polyacrylic acid under trade name ARON B-500 available from Toagosei Co., Ltd.) and 10 % ammonium water. Using this PSA composition, but otherwise in the same manner as in Example 1, a double-faced PSA sheet was fabricated. It had a gel fraction of 40.7 % when measured in the same manner as in Example 1.

<Comparative Example 2>

In the synthesis of the acrylic polymer B1, n-butyl acrylate (BA) was used in place of CHA under the polymerization conditions as shown in Table 1 to obtain an aqueous emulsion (B7e) of an acrylic polymer B7. Using the aqueous emulsion B7e, but otherwise in the same manner as Example 1, a PSA composition was prepared and a double-faced PSA sheet was fabricated.

The respective double-faced PSA sheets obtained above were tested for adhesive properties by the methods described earlier. The results are shown in Table 1. Table 1 also shows the Mw, Tg and SP values of the acrylic polymers (B) used in the respective Examples as well as their solubility differences $\Delta SP$ (i.e. $SP_A - SP_B$) relative to the acrylic polymer A1.

[Table 1]

Table 1

| Polymer (B) | Name | Ex. 1 | Ex. 2 | Ex. 3 | Ex. 4 | Ex. 5 | Ex. 6 | Comp. Ex. 1 | Comp. Ex. 2 |
|---|---|---|---|---|---|---|---|---|---|
| | | B1 | B2 | B3 | B4 | B5 | B6 | - | B7 |
| Polymer (B) composition | Monomer 1 (M1) | CHA | CHMA | IBXA | iBXMA | t-BMA | MMA | - | BA |
| | Monomer 2 (M2) | AA | AA | AA | AA | AA | AA | - | AA |
| | Weight ratio (M1/M2) | 95/5 | 95/5 | 95/5 | 95/5 | 95/5 | 95/5 | - | 95/5 |
| Polymer (B) polymerization conditions | Polymerization temperature. (°C) | 60 | 65 | 60 | 60 | 75 | 70 | - | 60 |
| | Chain transfer agent (pts. wt.) | 8 | 8 | 6 | 8 | 12 | 12 | - | 12 |
| | Polymerization initiator (pts. wt.) | 0.1 | 0.3 | 0.1 | 0.1 | 0.4 | 0.8 | - | 0.1 |
| | Emulsifier (pts. wt.) | 2 | 1 | 2 | 2 | 2 | 2 | - | 2 |
| Polymer (B) properties | $Mw$ (x $10^4$) | 0.49 | 0.52 | 0.53 | 0.51 | 0.47 | 0.48 | - | 0.53 |
| | $Tg$ (°C) | 18 | 68 | 97 | 175 | 107 | 105 | - | -49 |
| | SP value ((cal/cm$^3$)$^{1/2}$) | 10.78 | 10.24 | 9.82 | 9.69 | 9.54 | 10.24 | - | 10.44 |
| | $\triangle$SP ((cal/cm$^3$)$^{1/2}$) | -0.58 | -0.04 | 0.38 | 0.51 | 0.66 | -0.04 | - | -0.24 |
| Weight ratio (Polymer (A)/Polymer (B)) | | 100/30 | 100/30 | 100/30 | 100/30 | 100/30 | 100/30 | 100/0 | 100/30 |
| Adhesive properties | To-SUS peel strength (N/20mm) | 16.8 | 15.5 | 16.8 | 16.2 | 15.3 | 12.6 | 9.1 | 10.7 |
| | To-PP peel strength (N/20mm) | 17.7 | 13.7 | 16.6 | 14.1 | 12.3 | 10.5 | 10.5 | 11.4 |
| | Holding power test (displacement (mm)) | Held (3.5) | Held (1.8) | Held (1.6) | Held (0.3) | Held (1.7) | Held (1.5) | Held (1.0) | Fell |

As shown in Table 1, as compared to Comparative Example 1 containing the acrylic polymer A1 alone, with respect to Examples 1 to 6 in which acrylic polymers B1 to B6 had been added to the acrylic polymer A1, the to-SUS peel strength increased; with respect to Examples 1 to 5, both the to-SUS peel strength and to-PP peel strength increased. With respect to Examples 1 to 4, particularly great results were obtained. Examples 1 to 6 all exhibited good results in the holding power test. As evident from the displacements in the holding power test, with increasing Tg of the acrylic polymer (B) used, the holding power showed a tendency to increase. On the other hand, Comparative Example 2 using the acrylic polymer B7 having a Tg below 0 °C resulted in a fall-off in the holding power test and was unable to combine adhesive strength and cohesive strength.

<Experiment 2>

<Comparative Example 3>

In the synthesis of the acrylic polymer B2, the polymerization conditions were set as shown in Table 2 to obtain an aqueous emulsion (B8e) of an acrylic polymer B8. Using the aqueous emulsion B8e, but otherwise in the same manner as Example 1, a PSA composition was prepared and a double-faced PSA sheet was fabricated.

<Illustrative Examples 7 to 9 and Examples 10 and 11>

In the synthesis of the acrylic polymer B2, the polymerization conditions were set as shown in Table 2 to obtain aqueous emulsions (B9e to B13e) of acrylic polymers B9 to B13. Using these aqueous emulsions B9e to B13e, but otherwise in the same manner as Example 1, PSA compositions according to Illustrative Examples 7 to 9 and examples 10 and 11 were prepared, respectively and double-faced PSA sheets were prepared.

<Example 12>

In the synthesis of the acrylic polymer B3, the polymerization conditions were set as shown in Table 2 to obtain an aqueous emulsion (B14e) of an acrylic polymer B14. Using the aqueous emulsion B14e, but otherwise in the same manner as Example 1, a PSA composition was prepared and a double-faced PSA sheet was fabricated.

<Illustrative Example 13>

In the synthesis of the acrylic polymer B3, the monomer composition of the monomer emulsion was modified to 100 parts IBXA (i.e. AA was not used) and the polymerization conditions were set as shown in Table 3 to obtain an aqueous emulsion (B15e) of an acrylic polymer B15. Using the aqueous emulsion B15e, but otherwise in the same manner as Example 1, a PSA composition was prepared and a double-faced PSA sheet was fabricated.

<Example 14>

In the synthesis of the acrylic polymer B3, the monomer composition of the monomer emulsion was modified to 97 parts IBXA and 3 parts AA and the polymerization conditions were set as shown in Table 3 to obtain an aqueous emulsion (B16e) of an acrylic polymer B16. Using the aqueous emulsion B16e, but otherwise in the same manner as Example 1, a PSA composition was prepared and a double-faced PSA sheet was fabricated.

<Example 15>

In the synthesis of the acrylic polymer B3, the monomer composition of the monomer emulsion was modified to 93 parts IBXA and 7 parts AA and the polymerization conditions were set as shown in Table 3 to obtain an aqueous emulsion (B17e) of an acrylic polymer B17. Using the aqueous emulsion B17e, but otherwise in the same manner as Example 1, a PSA composition was prepared and a double-faced PSA sheet was fabricated.

<Example 16>

In the synthesis of the acrylic polymer B3, the monomer composition of the monomer emulsion was modified to 90 parts IBXA and 10 parts AA and the polymerization conditions were set as shown in Table 3 to obtain an aqueous emulsion (B18e) of an acrylic polymer B18. Using the aqueous emulsion B18e, but otherwise in the same manner as Example 1, a PSA composition was prepared and a double-faced PSA sheet was fabricated.

<Comparative Example 4>

In place of the aqueous emulsion B1e in Example 1, a tackifier resin emulsion was used. In particular, to 100 parts of non-volatiles of the aqueous emulsion A1e, was added 30 parts (based on non-volatiles) of an aqueous emulsion of a rosin phenolic resin (trade name TAMANOL E-200NT available from Arakawa Chemical Industries, Ltd.) having a softening point of 150 °C. Otherwise, in the same manner as Example 1, a PSA composition was prepared and a double-faced PSA sheet was fabricated.

The respective double-faced PSA sheets obtained above and the double-faced PSA sheets according to Examples 2 and 3 of Experiment 1 were tested for adhesive properties by the methods described earlier. The results are shown in Tables 2 and 3. These Tables also show the Mw, Tg and SP values of the acrylic polymers (B) used in the respective Examples as well as their solubility differences ΔSP (i.e. $SP_A - SP_B$) relative to the acrylic polymer A1. In Tables 2 and 3, the symbol "-" in a cell for a certain adhesive property indicates that the particular adhesive property was not tested.

[Table 2]

Table 2

| | | Comp. Ex. 3 | III. Ex. 7* | III. Ex. 8* | III. Ex. 9* | Ex. 10 | Ex. 2 | Ex. 11 | Ex. 12 |
|---|---|---|---|---|---|---|---|---|---|
| Polymer (B) | Name | B8 | B9 | B10 | B11 | B12 | B2 | B13 | B14 |
| Polymer (B) composition | Monomer 1 (M1) | CHMA | CHMA | CHMA | CHMA | CHMA | CHMA | CHMA | IBXA |
| | Monomer 2 (M2) | AA | AA | AA | AA | AA | AA | AA | AA |
| | Weight ratio (M1/M2) | 95/5 | 95/5 | 95/5 | 95/5 | 95/5 | 95/5 | 95/5 | 95/5 |
| Polymer (B) polymerization conditions | Polymerization temperature (°C) | 60 | 60 | 60 | 60 | 60 | 65 | 65 | 60 |
| | Chain transfer agent (pts. wt.) | 2 | 4 | 6 | 8 | 8 | 8 | 12 | 8 |
| | Polymerization initiator (pts. wt.) | 0.1 | 0.1 | 0.1 | 0.1 | 0.2 | 0.3 | 0.3 | 0.1 |
| | Emulsifier (pts. wt.) | 2 | 2 | 2 | 2 | 2 | 1 | 2 | 2 |
| Polymer (B) Properties | Mw (x $10^4$) | 6.1 | 3.1 | 2.1 | 1.0 | 0.68 | 0.52 | 0.38 | 0.36 |
| | Tg (°C) | 68 | 68 | 68 | 68 | 68 | 68 | 68 | 97 |
| | SP value ((cal/cm$^3$)$^{1/2}$) | 10.24 | 10.24 | 10.24 | 10.24 | 10.24 | 10.24 | 10.24 | 9.82 |
| | ΔSP ((cal/cm$^3$)$^{1/2}$) | -0.04 | -0.04 | -0.04 | -0.04 | -0.04 | -0.04 | -0.04 | 0.38 |
| Adhesive properties | To-SUS peel strength (N/20mm) | 8.1 | 11.7 | 12.2 | 14.3 | 16.3 | 15.5 | 15.4 | 16.3 |
| | To-PP peel strength (N/20mm) | 4.5 | 6.0 | 6.1 | 10.8 | 13.6 | 13.7 | 13.9 | 17.2 |
| | To-urethane foam peel strength (N/20mm) | - | - | - | 0.9 | 1.2 | 1.0 | 2.2 | 3.2 |
| | Foam repulsion resistance (mm) | - | - | - | 3.3 | 7.7 | 0.5 | 2.2 | 1.2 |
| | Aluminum repulsion resistance (mm) | 0.8 | 0.0 | 0.0 | 0.0 | 0.0 | 0.0 | 0.5 | 0.0 |
| | Holding power test (displacement (mm)) | Held (0.1) | Held (0.3) | Held (0.6) | Held (1.1) | Held (1.1) | Held (1.8) | Held (2.2) | Held (2.1) |

* these examples are illustrative examples outside the scope of the claims

[Table 3]

Table 3

| | | III. Ex. 13* | Ex. 14 | Ex. 3 | Ex. 15 | Ex. 16 | Comp. Ex. 4 |
|---|---|---|---|---|---|---|---|
| Polymer (B) | Name | B15 | B16 | B3 | B17 | B18 | Tackifier resin |
| Polymer (B) composition | Monomer 1 (M1) | IBXA | IBXA | IBXA | IBXA | IBXA | |
| | Monomer 2 (M2) | - | AA | AA | AA | AA | |
| | Weight ratio (M1/M2) | 100/0 | 97/3 | 95/5 | 93/7 | 90/10 | |
| Polymer (B) polymerization conditions | Polymerization temperature (°C) | 60 | 60 | 60 | 60 | 60 | - |
| | Chain transfer agent (pts. wt.) | 5 | 6 | 6 | 6.5 | 7 | - |
| | Polymerization initiator (pts. wt.) | 0.1 | 0.1 | 0.1 | 0.1 | 0.1 | - |
| | Emulsifier (pts. wt.) | 2 | 2 | 2 | 2 | 2 | - |
| Polymer (B) Properties | Mw($\times 10^4$) | 0.61 | 0.53 | 0.53 | 0.50 | 0.49 | - |
| | Tg (°C) | 97 | 97 | 97 | 98 | 98 | - |
| | SP value ($(cal/cm^3)^{1/2}$) | 9.35 | 9.64 | 9.82 | 9.98 | 10.21 | - |
| | $\triangle$SP ($(cal/cm^3)^{1/2}$) | 0.85 | 0.56 | 0.38 | 0.22 | -0.01 | - |
| Adhesive properties | To-SUS peel strength (N/20mm) | 14.5 | 16.9 | 16.8 | 16.6 | 17.0 | 16.8 |
| | To-PP peel strength (N/20mm) | 16.6 | 16.7 | 16.6 | 16.0 | 15.8 | 14.3 |
| | To-urethane foam peel strength (N/20mm) | 1.6 | 3.3 | 2.2 | 3.3 | 3.0 | 1.2 |
| | Foam repulsion resistance (mm) | 0.0 | 0.0 | 1.3 | 0.0 | 3.3 | Peeled off |
| | Aluminum repulsion resistance (mm) | 0.9 | 0.0 | 2.4 | 0.0 | 1.7 | - |
| | Holding power test (displacement (mm)) | Held (1.0) | Held (1.2) | Held (1.6) | Held (1.1) | Held (1.3) | Held (1.8) |
| * this example is an illustrative example outside the scope of the claims | | | | | | | |

As shown in Table 2, with respect to Illustrative Examples 7 to 9 and Examples 10 to 12 and Example 2 using acrylic polymers (B) with Mw of $5 \times 10^4$ or lower, as compared to Comparative Example 3 using the acrylic polymer B8 with Mw of $6.1 \times 10^4$, clearly higher adhesive strength was obtained along with great repulsion resistance. Greater results were obtained with Illustrative Example 9, Examples 10 to 12 and Example 2 using acrylic polymers (B) with Mw lower than $2 \times 10^4$. Particularly great results were obtained with Examples 10 to 12 and Example 2 using acrylic polymer (B) with Mw lower than $1 \times 10^4$. As evident from Tables 1 and 2, the to-PP peel strength had a tendency to increase with the use of an acrylic polymer (B) having a monomer composition that comprises a cyclic (meth)acrylate. With decreasing Mw of the acrylic polymer (B), the to-urethane foam peel strength showed a tendency to increase. It is noted that no fall-off was observed in any of Illustrative Examples 7 to 9 and Examples 10 to 12 in the holding power test.

As shown in Table 3, with respect to Examples 14 to 16 and Example 3 using acrylic polymers (B) comprising a carboxy group-containing monomer, as compared to Illustrative Example 13 using the acrylic polymer B15 free of a carboxy group-containing monomer, higher to-SUS peel strength was displayed. With increasing carboxy group-containing monomer content, the to-SUS peel strength showed a tendency to increase. On the other hand, in the repulsion resistance test to urethane foam, Comparative Example 4 using a heretofore known tackifier resin in place of the acrylic polymer (B) fell short of the respective Examples shown in Table 3.

The following has also been found: The PSA compositions of Examples 15 to 16 and Example 3 shown in Table 3 were applied to 25 $\mu$m thick PET film to thicknesses of 60 $\mu$m after dried; the PSA layers formed upon drying were visually inspected for their transparency to find a tendency of the transparency to increase in the order from Illustrative Example 13, to Example 14, to Example 3, to Example 15, to Example 16. This result indicates that the compatibility increases as $\Delta$SP becomes closer to zero.

Although specific embodiments of the present invention are described in detail above, these are merely for illustrations and do not limit the scope of claims. The art according to the claims includes various modifications and changes made to the specific embodiments illustrated above.

[Reference Signs List]

1, 2, 3, 4, 5, 6: PSA sheets
10: substrate
21, 22: PSA layers
31, 32: release liners
50: test piece
50A: edge
502: PSA sheet
504: urethane foam
52: ABS plate
52A: first face
52B: second face
8: test piece
82: PSA layer (PSA sheet)
84: release liner
85: aluminum plate
86: acrylic plate
9: glass tube

Claims

1. A water-dispersed pressure-sensitive adhesive composition comprising
   an acrylic polymer (A) being a polymer of a starting monomer mixture (A), and
   an acrylic polymer (B) being a polymer of a starting monomer mixture (B), wherein
   the acrylic polymer (B) has a glass transition temperature of 0°C or higher, the glass transition temperature being determined by the Fox equation based on the Tg values of homopolymers of the respective monomers forming the polymer and their weight fractions of the monomers,
   the acrylic polymer (B) has a weight average molecular weight of from $0.35 \times 10^4$ or higher and below $1 \times 10^4$, and
   the acrylic polymer (A) has a weight average molecular weight higher than the weight average molecular weight of the acrylic polymer (B),
   wherein the starting monomer mixture (B) comprises a carboxy group-containing monomer at a ratio of 1% by weight or greater but 20% by weight or lower,
   wherein the weight average molecular weight is determined by GPC using a THF solution and polystyrene as a standard as disclosed herein;
   wherein the pressure-sensitive adhesive composition is free of a conventional general tackifier resin emulsion, or a tackifier is used in an amount of 5 parts by weight or less to 100 parts by weight of the amount of the polymers (A) and (B) combined.

2. The water-dispersed pressure-sensitive adhesive composition according to claim 1, wherein the starting monomer mixture (B) comprises a (meth)acrylate having a cyclic structure.

3. The water-dispersed pressure-sensitive adhesive composition according to claim 1 or 2, comprising 5 parts to 50 parts by weight of the acrylic polymer (B) to 100 parts by weight of the acrylic polymer (A).

4. The water-dispersed pressure-sensitive adhesive composition according to any one of claims 1 to 3, wherein the glass transition temperature of the acrylic polymer (B) is 50°C or higher, but 120°C or lower, the glass transition temperature being determined by the Fox equation based on the Tg values of homopolymers of the respective monomers forming the polymer and their weight fractions of the monomers.

5. The water-dispersed pressure-sensitive adhesive composition according to any one of claims 1 to 4, wherein the starting monomer mixture (A) comprises more than 50% by weight of an alkyl (meth)acrylate having an alkyl group with 4 to 12 carbon atoms.

6. The water-dispersed pressure-sensitive adhesive composition according to any one of claims 1 to 5, wherein the starting monomer mixture (A) comprises a carboxy group-containing monomer at a ratio of 10% by weight or lower.

7. The water-dispersed pressure-sensitive adhesive composition according to any one of claims 1 to 6, wherein of the acrylic polymer (A) has a glass transition temperature of -20°C or lower, the glass transition temperature being determined by the Fox equation based on the Tg values of homopolymers of the respective monomers forming the polymer and their weight fractions of the monomers.

8. The water-dispersed pressure-sensitive adhesive composition according to any one of claims 1 to 7, wherein the acrylic polymer (A) has an SP value $SP_A$ and the acrylic polymer (B) has an SP value $SP_B$ with a solubility difference $\Delta SP$ greater than -2.0 $(cal/cm^3)^{1/2}$, but less than 2.0 $(cal/cm^3)^{1/2}$, with the $\Delta SP$ being defined as the difference ($SP_A$ - $SP_B$) between $SP_A$ and $SP_B$, wherein the SP value refers to a solubility parameter determined based on the basic structure of the compound by the method proposed by Fedors.

9. A pressure-sensitive adhesive sheet having a pressure-sensitive adhesive layer formed with the pressure-sensitive adhesive composition according to any one of claims 1 to 8.

**Patentansprüche**

1. Wasserdispergierte druckempfindliche Klebstoffzusammensetzung, umfassend

ein Acrylpolymer (A), bei dem es sich um eine Polymer aus einem Start-Monomergemisch (A) handelt, und ein Acrylpolymer (B), bei dem es sich um eine Polymer aus einem Start-Monomergemisch (B) handelt, wobei das Acrylpolymer (B) eine Glasübergangstemperatur von 0 °C oder mehr aufweist, wobei die Glasübergangstemperatur durch die Fox-Gleichung bestimmt wird, beruhend auf den Tg-Werten von Homopolymeren der jeweiligen Monomere, die das Polymer bilden, und ihren Gewichtsanteilen der Monomere, das Acrylpolymer (B) ein gewichtsgemitteltes Molekulargewicht von 0,35 x 10⁴ oder mehr und unterhalb von 1 x 10⁴ aufweist und das Acrylpolymer (A) ein höheres gewichtsgemitteltes Molekulargewicht als das gewichtsgemittelte Molekulargewicht des Acrylpolymers (B) aufweist, wobei das Start-Monomergemisch (B) ein Carboxygruppen-enthaltendes Monomer in einem Verhältnis von 1 Gewichts-% oder mehr aber 20 Gewichts-% oder weniger umfasst, wobei das gewichtsgemittelte Molekulargewicht durch GPC unter Verwendung einer THF-Lösung und Polystyrol als einem Standard wie hierin offenbart bestimmt wird; wobei die druckempfindliche Klebstoffzusammensetzung frei von einer herkömmlichen allgemeinen klebrigmachenden Harzemulsion ist oder ein Klebrigmacher in einer Menge von 5 Gewichtsanteilen oder weniger bis 100 Gewichtsanteilen der Menge der Polymere (A) und (B) zusammengenommen verwendet wird.

2. Wasserdispergierte druckempfindliche Klebstoffzusammensetzung gemäß Anspruch 1, wobei das Start-Monomergemisch (B) ein (Meth)Acrylat umfasst, das eine zyklische Struktur aufweist.

3. Wasserdispergierte druckempfindliche Klebstoffzusammensetzung gemäß Anspruch 1 oder 2, umfassend 5 Gewichtsanteile bis 50 Gewichtsanteile des Acrylpolymers (B) auf 100 Gewichtsanteile des Acrylpolymers (A).

4. Wasserdispergierte druckempfindliche Klebstoffzusammensetzung gemäß einem der Ansprüche 1 bis 3, wobei die Glasübergangstemperatur des Acrylpolymers (B) 50 °C oder mehr, aber 120 °C oder weniger beträgt, wobei die Glasübergangstemperatur durch die Fox-Gleichung bestimmt wird, beruhend auf den Tg-Werten von Homopolymeren der jeweiligen Monomere, die das Polymer bilden, und ihren Gewichtsanteilen der Monomere.

5. Wasserdispergierte druckempfindliche Klebstoffzusammensetzung gemäß einem der Ansprüche 1 bis 4, wobei das Start-Monomergemisch (A) mehr als 50 Gewichts-% eines Alkyl(meth)acrylats umfasst, das eine Alkylgruppe mit 4 bis 12 Kohlenstoffatomen aufweist.

6. Wasserdispergierte druckempfindliche Klebstoffzusammensetzung gemäß einem der Ansprüche 1 bis 5, wobei das Start-Monomergemisch (A) ein Carboxygruppen-enthaltendes Monomer in einem Verhältnis von 10 Gewichts-% oder weniger umfasst.

7. Wasserdispergierte druckempfindliche Klebstoffzusammensetzung gemäß einem der Ansprüche 1 bis 6, wobei das Acrylpolymer (A) eine Glasübergangstemperatur von -20 °C oder weniger aufweist, wobei die Glasübergangstemperatur durch die Fox-Gleichung bestimmt wird, beruhend auf den Tg-Werten von Homopolymeren der jeweiligen Monomere, die das Polymer bilden, und ihren Gewichtsanteilen der Monomere.

8. Wasserdispergierte druckempfindliche Klebstoffzusammensetzung gemäß einem der Ansprüche 1 bis 7, wobei das Acrylpolymer (A) einen SP-Wert $SP_A$ aufweist und das Acrylpolymer (B) einen SP-Wert $SP_B$ aufweist, mit einem Löslichkeitsunterschied $\Delta SP$ von mehr als -2,0 $(cal/cm^3)^{1/2}$, aber weniger als 2,0 $(cal/cm^3)^{1/2}$, wobei der $\Delta SP$ als die Differenz $(SP_A - SP_B)$ zwischen $SP_A$ und $SP_B$ definiert ist, wobei sich der SP-Wert auf einen Löslichkeitsparameter bezieht, der beruhend auf der Grundstruktur der Verbindung durch das von Fedors vorgeschlagene Verfahren bestimmt wird.

9. Druckempfindliche Klebefolie mit einer druckempfindlichen Klebeschicht, gebildet mit der druckempfindlichen Klebstoffzusammensetzung gemäß einem der Ansprüche 1 bis 8.

**Revendications**

1. Composition d'adhésif sensible à la pression en dispersion dans l'eau comprenant
un polymère acrylique (A) qui est un polymère d'un mélange de monomères de départ (A), et
un polymère acrylique (B) qui est un polymère d'un mélange de monomères de départ (B),
le polymère acrylique (B) ayant une température de transition vitreuse supérieure ou égale à 0 °C, la température de transition vitreuse étant déterminée par l'équation de Fox sur la base des valeurs de Tg d'homopolymères des monomères respectifs formant le polymère et de leurs fractions massiques en monomères,
le polymère acrylique (B) ayant une masse moléculaire moyenne en poids supérieure ou égale à $0,35 \times 10^4$ et inférieure à $1 \times 10^4$, et
le polymère acrylique (A) ayant une masse moléculaire moyenne en poids supérieure à la masse moléculaire moyenne en poids du polymère acrylique (B),
le mélange de monomères de départ (B) comprenant un monomère contenant un groupe carboxyle dans un rapport de 1 % en poids ou plus mais 20 % en poids ou moins,
la masse moléculaire moyenne en poids étant déterminée par GPC en utilisant une solution de THF et du polystyrène comme étalon, comme indiqué dans la description ;
la composition d'adhésif sensible à la pression étant dépourvue d'émulsion de résine apportant du collant générale traditionnelle, ou un agent apportant du collant étant utilisé à hauteur de 5 parties en poids ou moins pour 100 parties en poids de la quantité des polymères (A) et (B) combinés.

2. Composition d'adhésif sensible à la pression en dispersion dans l'eau selon la revendication 1, dans laquelle le mélange de monomères de départ (B) comprend un (méth)acrylate ayant une structure cyclique.

3. Composition d'adhésif sensible à la pression en dispersion dans l'eau selon la revendication 1 ou 2, comprenant de 5 parties à 50 parties en poids polymère acrylique (B) pour 100 parties en poids du polymère acrylique (A).

4. Composition d'adhésif sensible à la pression en dispersion dans l'eau selon l'une quelconque des revendications 1 à 3, dans laquelle la température de transition vitreuse du polymère acrylique (B) est supérieure ou égale à 50 °C, mais inférieure ou égale à 120 °C, la température de transition vitreuse étant déterminée par l'équation de Fox sur la base des valeurs de Tg d'homopolymères des monomères respectifs formant le polymère et de leurs fractions massiques en monomères.

5. Composition d'adhésif sensible à la pression en dispersion dans l'eau selon l'une quelconque des revendications 1 à 4, dans laquelle le mélange de monomères de départ (A) comprend plus de 50 % en poids d'un alkyl(méth)acrylate ayant un groupe alkyle avec 4 à 12 atomes de carbone.

6. Composition d'adhésif sensible à la pression en dispersion dans l'eau selon l'une quelconque des revendications 1 à 5, dans laquelle le mélange de monomères de départ (A) comprend un monomère contenant un groupe carboxyle suivant un rapport de 10 % en poids ou moins.

7. Composition d'adhésif sensible à la pression en dispersion dans l'eau selon l'une quelconque des revendications 1 à 6, dans laquelle le polymère acrylique (A) a une température de transition vitreuse inférieure ou égale à -20 °C, la température de transition vitreuse étant déterminée par l'équation de Fox sur la base des valeurs de Tg d'homopolymères des monomères respectifs formant le polymère et de leurs fractions massiques en monomères.

8. Composition d'adhésif sensible à la pression en dispersion dans l'eau selon l'une quelconque des revendications 1 à 7, dans laquelle le polymère acrylique (A) a une valeur SP notée $SP_A$ et le polymère acrylique (B) a une valeur SP notée $SP_B$ avec une différence de solubilité $\Delta SP$ supérieure à -2,0 $(cal/cm^3)^{1/2}$, mais inférieure à 2,0 $(cal/cm^3)^{1/2}$, où $\Delta SP$ est définie comme la différence $(SP_A - SP_B)$ entre $SP_A$ et $SP_B$, la valeur SP désignant un paramètre de solubilité déterminé à partir de la structure basique du composé par la méthode proposée par Fedors.

9. Feuille adhésive sensible à la pression ayant une couche d'adhésif sensible à la pression formée avec la composition d'adhésif sensible à la pression selon l'une quelconque des revendications 1 à 8.

[Fig. 1]

[Fig. 2]

[Fig. 3]

[Fig. 4]

4

21B

21A

21

31

[Fig. 5]

5

21A

10A

31

21

10

[Fig. 6]

6

21B

10A

21

10

10B

[Fig. 7]

[Fig. 8]

[Fig. 9]

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006176781 A
- JP 2012188512 A
- EP 2177583 A1
- EP 2730630 A1
- KR 20130108108 A
- JP 2003105298 A

**Non-patent literature cited in the description**

- **C. A. DAHLQUIST.** Adhesion: Fundamental and Practice. McLaren & Sons, 1966, 143
- Polymer Handbook. John Wiley & Sons, Inc, 1999
- *Journal of the Adhesive Society of Japan,* 1986, vol. 22 (10), 566